(19) Europäisches Patentamt
European Patent Office
Office européen des brevets

(11) **EP 0 717 894 B1**

(12) **EUROPÄISCHE PATENTSCHRIFT**

(45) Veröffentlichungstag und Bekanntmachung des Hinweises auf die Patenterteilung:
**05.07.2000 Patentblatt 2000/27**

(51) Int. Cl.[7]: **H04L 5/06**

(21) Anmeldenummer: **94927520.0**

(86) Internationale Anmeldenummer:
**PCT/EP94/02884**

(22) Anmeldetag: **31.08.1994**

(87) Internationale Veröffentlichungsnummer:
**WO 95/07581 (16.03.1995 Gazette 1995/12)**

(54) **VERFAHREN ZUR ÜBERTRAGUNG VON REFERENZSIGNALEN IN EINEM OFDM-SYSTEM**

METHOD FOR THE TRANSMISSION OF REFERENCE SIGNALS IN AN OFDM SYSTEM

PROCEDE DE TRANSMISSION DE SIGNAUX DE REFERENCE DANS UN SYSTEME A MODULATION PAR MULTIPLEXAGE FREQUENTIEL OPTIQUE

(84) Benannte Vertragsstaaten:
**DE ES FR GB IT**

(30) Priorität: **10.09.1993 DE 4330665**
**10.09.1993 DE 4330672**
**17.03.1994 EP 94104156**

(43) Veröffentlichungstag der Anmeldung:
**26.06.1996 Patentblatt 1996/26**

(73) Patentinhaber:
**DEUTSCHE THOMSON-BRANDT GMBH**
**78048 Villingen-Schwenningen (DE)**

(72) Erfinder:
• **KLANK, Otto**
**D-31274 Lehrte (DE)**
• **LAABS, Jürgen**
**D-30982 Pattensen (DE)**

(74) Vertreter:
**Hartnack, Wolfgang, Dipl.-Ing.**
**Deutsche Thomson-Brandt GmbH**
**European Patent Operations**
**Karl-Wiechert-Allee 74**
**30625 Hannover (DE)**

(56) Entgegenhaltungen:
**EP-A- 0 441 731       EP-A- 0 529 421**
**EP-A- 0 549 445       WO-A-85/03180**

• **IEEE Global Telecommunications Conference, 6-9 December 1992, Orlando, US; IEEE, New York, US, 1992; pages 1694 - 1698, Saito et al: "A digital modulation method for terrestrial digital TV broadcasting using trellis coded OFDM and its performance"**

**Beschreibung**

Die Erfindung betrifft ein Verfahren zur Übertragung eines digitalen Signals in Rahmen unter Verwendung einer Vielzahl von modulierten Trägern und eine entsprechende Vorrichtung zur Decodierung.

Stand der Technik

Es sind verschiedene Verfahren für eine terrestrische Übertragung von digitalen Rundfunksignalen bekannt, wie OFDM-, QPSK- und QAM-Modulation. Ein Hauptproblem in Verbindung mit derartigen Systemen ist die Synchronisation in dem Fall, wo ein Empfänger eingeschaltet oder auf einen anderen Kanal abgestimmt wird.
Es ist ein Synchronisationsverfahren dieser Art für DAB (Digital Audio Broadcast) bekannt, bei dem ein volles Nullsymbol und ein sogenanntes TFPC-Symbol (Time Frequency Phase Control) nacheinander übertragen und im Empfänger in bestimmter Weise ausgewertet werden. Das TFPC-Symbol ist, wie die Signalströme der zu übertragenden Nutzinformation, den einzelnen Trägern bzw. Frequenzen des OFDM-Vielträger-Verfahrens zugeordnet. Zur Auswertung werden die Abtastwerte in eine Frequenzdarstellung transformiert, dort ausgewertet und die Ergebnisse wieder in den Zeitbereich rücktransformiert. Ein derartiges COFDM-Modulationsverfahren ist in der EP-A-0 529 421 beschrieben.

Erfindung

Der Erfindung liegt die Aufgabe zugrunde, ein Verfahren zur Übertragung eines digitalen Signals in Rahmen unter Verwendung einer Vielzahl von modulierten Trägern anzugeben, bei dem die empfängerseitige Synchronisation verbessert ist. Diese Aufgabe wird durch das in Anspruch 1 und 14 angegebene Verfahren gelöst.
Der Erfindung liegt die weitere Aufgabe zugrunde, eine Vorrichtung zur Anwendung des erfindungsgemäßen Verfahrens anzugeben. Diese Aufgabe wird durch die in den Ansprüchen 12 und 35 angegebenen Vorrichtungen gelöst.
Das übertragene Signal enthält eine Vielzahl von modulierten Trägern (OFDM-Modulation, die beschrieben ist z.B. in "Data transmission by frequency division multiplexing using the discrete Fourier transform", Weinstein, S.B. et al., IEEE Transactions on Communication Technology, Vol. COM-19, No. 15, October 1971 und in "An orthogonally multiplexed QAM system using the discrete Fourier transform", Hirosaki, B., IEEE Transactions on Communication Technology, Vol. COM-29, No. 7, July 1981). Zum Beispiel kann eine QPSK- und/oder QAM-Modulation für diese Träger verwendet werden. Ein bestimmter Betrag der gesamten Kanalkapazität ist bestimmt für die Synchronisierung und die Kanal-Schätz/Korrektur-Daten.
Bei der erfindungsgemäßen Lösung ist die Leistung des Signals während eines Teils der Symboldauer des Synchronisationssymbols null oder nahezu null. Über einen weiteren Zeitabschnitt kann ein vom im übrigen Teil benutzten OFDM-Verfahren abweichendes Verfahren zur Modulation angewendet werden. Die Modulation dieses Teils beinhaltet zumindest eine Sequenz mit optimalen Autokorrelationseigenschaften, z.B. eine M-Sequenz, d.h. PRN-Folge von maximaler Länge bzw. eine bestimmte Anzahl von sogenannten CAZAC-Sequenzen (constant amplitude zero auto correlation). Derartige CAZAC-Sequenzen sind ebenfalls in der EP-A-0 529 421 beschrieben.
Anstelle einer den Frequenzen zugeordneten Informationsfolge kann diese in zeitlicher Reihenfolge definierte und auf einen zentral gelegenen Träger modulierte Bitsequenz übertragen werden, wobei der Abstand der Bits der Sequenz bzw. Sequenzen den bei der (Über-)Abtastung der OFDM-Symbole verwendeten Zeitabständen oder einem Vielfachen dieser Zeitabstände entspricht oder
es wird bei halber effektiver Symbollänge nur jeder zweite Träger benutzt.
Die Länge des Teils mit Leistung null entspricht etwa der halben (OFDM-)Symboldauer, wodurch eine Sequenz etwa die Länge eines Viertels des Symbols hat. Wenn z.B. bei einem TV-Übertragungsverfahren von 2048 möglichen Trägern (Länge oder FFT/Fast Fourier Transformation) 1900 effektiv genutzt werden, so ergibt das für den Signalteil des Synchronisationssymbols 950 nutzbare Träger. Damit kann eine M-Sequenz der Länge 512-1 etwa 1,85-mal übertragen werden. Jedem Wert der Sequenz (z.B. null oder eins) wird eine Trägerphasenlage zugeordnet, z.B. bei QPSK 0° und 180°. Für den Anteil von 1,85-1 = 0,85 bzw. 85% der zweiten Sequenz wird zweckmäßigerweise eine andere Trägerphasenzuordnung gewählt. Bei einer höherstufigen QAM, z.B. 64-QAM im Fall der TV-Übertragung, werden für den Signalanteil des Synchronisationssymbols nur die einem QPSK-System entsprechenden Grundwerte benutzt, d.h. vier sich um 90° unterscheidende Phasenlagen mit konstanter Amplitude.
Bei QPSK-Modulation können die Sequenzen nur in einem Teilkanal (I oder Q) übertragen werden, und die Datenfolge im anderen Teilkanal ist konstant. Bei einer anderen Lösung werden die Sequenzen in beiden Teilkanälen (I und Q), jedoch mit unterschiedlichem Vorzeichen (0 bzw. 1) übertragen. Bei einer höherstufigen QAM oder einer sogenannten Multiresolution-QAM erfolgt dann die Modulation des Synchronisations-Signals auf der untersten Ebene, d.h. auf QPSK-Basis.
Die vorgeschlagene Aufteilung des Synchronisationssymbols hat den Vorteil, daß der Nullanteil und der eigentliche Signalanteil des Syncsymbols je etwa die halbe Symboldauer einnehmen. Bei Mehrwege-Empfang können Verzögerungszeitunterschiede bis zur Dauer der effektiven Sequenz, also bis zur Länge des Signalanteils und damit bis zur halben Symboldauer noch identifiziert werden. Diese Dauer ist im allgemeinen größer als die verwendete Guardintervall-Länge, so daß eine vergleichbare oder noch etwas bessere Sicherheit gegen Mehrwegausbreitung erreicht wird. Während des Nullanteils kann zusätzlich eine verminderte Anzahl von Trägern zur Senderidentifikation mit einer insgesamt so niedrigen Leistung übertragen werden, daß hierdurch die Detektion des Nullanteils im Empfänger nicht wesentlich beeinflußt wird. Zur optimalen Wahl der Zusammenhänge zwischen Rahmenlänge, Anzahl der Nutzsymbole pro Rahmen und Abtastfolge kann eine von der Dauer der OFDM-Symbole leicht abweichende Länge des Synchronisationssymbols gewählt werden, in dem der Nullanteil etwas verkürzt oder verlängert ist.

Um zu einem geringeren Rechenaufwand im Empfänger zu gelangen und eine bestimmte Form der Auswertung im Empfänger zu ermöglichen, kann eine wesentlich kürzere Sequenz gewählt und entsprechend oft übertragen werden. Der Abstand der Bits der Sequenz kann dabei dem n-fachen Wert der bei der Überabtastung der OFDM-Symbole verwendeten Zeitabstände entsprechen, im Folgenden als n-Abstand bezeichnet. Vorzugsweise werden CAZAC-Sequenzen der Länge 16 benutzt, was im Fall der 950 nutzbaren Träger eine 59,4-fache Wiederholung bedeutet. Da die Wiederholung genau gleicher Anordnungen bei einer Korrelationsauswertung zu Mehrdeutigkeiten führen würde, werden die folgenden Sequenzen durch abweichende Wahl der Zuordnung zu den Modulationswinkeln und durch Hinzufügen konstanter Winkeländerungen modifiziert. Jede neu erhaltene Sequenz wird aus Gründen der Eindeutigkeit der Korrelation zweimal übertragen, so daß sich bei dem gewählten Beispiel insgesamt 29 Paare und eine einzelne Sequenz ergeben. Die Modulation kann anstatt direkt über die Trägerfolge auch differentiell ausgeführt werden. Eine genauere Beschreibung ist in der DE-A-4128713 enthalten. Bei einem Empfänger für dieses Verfahren erfolgt eine Grobsynchronisation auf der Basis des Teilsymbols mit Leistung null, indem z.B. durch Gleichrichtung und Filterung des empfangenen und in das Basisband konvertierten Signale Synchronisationsimpulse abgeleitet und zur Festlegung des Rahmenstarte bzw. Symbolfenstere benutzt werden. Danach erfolgt auf der Basis der Grobsynchronisation die Auswertung des Signalanteils des empfangenen Synchronisationssymbols, und danach wird eine genauere Festlegung des Zeitbereiches des Symbols bzw. der Symbole vorgenommen.

Hierzu wird das in zeitlicher Folge abgetastete Signal wie beim Signalanteil der Nutzinformation durch eine FFT in eine Darstellung im Frequenzbereich transformiert, dort mit der entsprechenden - im Empfänger gespeicherten - Sollsequenz konjugiert-komplex multipliziert (entspricht real einer Division), und anschließend wird das Ergebnis wieder in die Zeitdarstellung zurücktransformiert. Dieses Ergebnis repräsentiert die Kanalstoßantwort, nach der der je Symbol abzutastende Zeitbereich (Symbolfenster) so festgelegt wird, daß möglichst alle Komponenten der Stoßantwort erfaßt werden. Hierzu wird ein synchron zum Rahmen laufender Zähler entsprechend vor- oder nachgestellt. Eine Korrelation des in die Frequenzdarstellung transformierten Signalteils des Synchronisationssymbols und der im Empfänger gespeicherten Sollsequenz und eine nachfolgende rechnerische Auswertung liefern eine Information über die Frequenzabweichung des empfangenen und in eine andere Frequenzlage umgesetzten Signals (z.B. Basisband), die nach Digital-Analogwandlung und Filterung zur Frequenznachstellung des lokalen Oszillators benutzt wird. Im Fall der mehrfachen Übertragung von Sequenzen kürzerer Länge werden die Ergebnisse nach der FFT abschnittsweise auf die Grundform der Sequenz umgerechnet, abschnittsweise gemittelt, und es wird dann nur noch eine Korrelation über eine kürzere Länge durchgeführt.

Im Fall des n-Abstands wird zur Auswertung eine Korrelation der empfangenen Sequenz mit der gespeicherten Sollsequenz durchgeführt. Das Korrelationsergebnis stellt die Kanalstoßantwort dar, nach der der je Symbol abzutastende Zeitbereich (Symbolfenster) so festgelegt wird, daß möglichst alle Komponenten der Kanalstoßantwort erfaßt werden.

Im Empfänger wird bei der gedehnten Übertragung kürzerer Sequenzen vorzugsweise bei der Korrelation nur jeder n-te Wert der mit unveränderter Folge durchgeführten Abtastung benutzt. Alternativ werden im Empfänger n Korrelationen mit um ein bis n Abtastintervalle versetzten Folgen, bei denen nur jeder n-te erhaltene Wert genutzt wird, durchgeführt. Dabei wird entweder nur das Ergebnis mit dem höchsten Spitzenwert weiter benutzt, oder es werden die Ergebnisse von n Korrelationen gemittelt. Im Prinzip kann auch bereits eine Mittelung der jeweils n Abtastwerte vorgenommen werden, wobei dann die Korrelation mit den Resultaten durchgeführt wird.

Die Korrelation bzw. Korrelationen können auch in diesem Fall durch Transformation der empfangenen Sequenz in eine Frequenzdarstellung, konjugiert-komplexe Multiplikation mit einer entsprechenden Sollfolge und Rücktransformation realisiert werden. Eine vorteilhafte Auslegung ergibt sich auch in diesem Fall, wenn der Nullanteil und der eigentliche Signalanteil des Syncsymbols je etwa die halbe Symboldauer einnehmen, weil bei Mehrwege-Empfang Verzögerungszeiten bis zur Dauer der effektiven Sequenzlänge, also bei doppelter Übertragung bis zur halben Länge des Signalanteils und damit einem Viertel der Syncsymboldauer zulässig sind, und diese Dauer etwa der üblicherweise verwendeten Guardintervall-Länge entspricht.

Das übertragene Signal kann ein Zeit-Frequenz-Phasen-Referenzsymbol enthalten, welches durch eine bestimmte Zahl von CAZAC-Sequenzen (constant amplitude zero auto correlation) moduliert ist. Zusätzlich wird dann in jedem Rahmen ein weiteres Referenzsymbol übertragen, das mindestens mit einer Pseudo-Zufallssequenz moduliert ist, die eine größere Länge hat als jede dieser CAZAC-Sequenzen.

In einer weiteren Ausführungsform der Erfindung wird ein Teil der CAZAC-Sequenzen des als erstes genannten Zeit-Frequenz-Phasen-Referenzsymbols durch mindestens eine Pseudo-Zufalls-Sequenz ersetzt, die eine größere Länge hat als jede dieser CAZAC-Sequenzen, wobei derartige größere Sequenzen vorzugsweise bei den äußeren Trägern angeordnet sind, d.h. bei den niedrigsten und den höchsten Frequenzen.

Die Pseudo-Zufalls-Sequenzen können in einem Differenz-Mode codiert sein. In vorteilhafter Weise werden die Codewörter unter Verwendung von QPSK auf die Träger aufmoduliert. Die Pseudo-Zufalls-Sequenzen können eine optimale Autokorrelations-Charakteristik (z.B. M-Sequenzen) aufweisen, z.B. durch Verwendung einer Maximallänge von $2^{n-1}$.

In einem Decoder werden derartige zusätzliche Sequenzen nach der Demodulation (einschließlich FFT) und der differenziellen Rückumwandlung durch eine Korrelation ausgewertet. Die CAZAC-Sequenzen werden so ausgewertet, wie es in EP-A-0529421 beschrieben ist.

Die resultierende Information kann verwendet werden um folgendes zu korrigieren:

- die Frequenz mindestens eines der Oszillatoren, die im Empfänger für die Frequenzumsetzung benutzt werden;
- oder, in einer ähnlichen Anordnung, beispielsweise einem Multiplizierer;
- oder im Falle von PLL-gesteuerten Oszillatoren für die Korrektur des Referenz-Oszillators.

Die zusätzlichen Pseudo-Zufalls-Sequenzen dienen als Bereichsausweitungs-Information (extended area information), die es ermöglichen, wesentliche Abweichungen der normalen Empfänger-Oszillatorfrequenz zu ermitteln und zu korrigieren oder die Oszillatorfrequenz zu ermitteln und zu korrigieren, wenn die Senderfrequenz von einem vorgegebenen Raster (offset) abweicht. Vorzugsweise werden die übertragenen Pseudo-Zufalls-Sequenzen noch weiter ausgewertet, nachdem die erforderliche Oszillator- oder Frequenzumsetz-Genauigkeit erreicht ist. Dieses Ergebnis kann jedoch auch solange keine Auswirkung haben, wie ein festgelegter Abweichungs-Bereich nicht überschritten wird. Als weiteres Merkmal können innerhalb eines Rahmens mehrere Symbole benutzt werden, die mit den CAZAC- und dem zusätzlichen Pseudo-Zufalls-Sequenzen moduliert sind.

Vorteilhaft können die Referenzsymbole als Zeit-Frequenz-Phasen-Symbole dienen.

Beide der oben beschriebenen Typen von Referenzsymbolen können zusammen mit weiteren speziellen Symbolen oder Pilotzellen benutzt werden, die durch einen Träger und ein Zeitfenster oder ein Zeitsymbol definiert sind, d.h. welche nur einen Teil der Träger zu bestimmten Zeitperioden belegen, um den Kanalstatus zu bestimmen und für eine nachfolgende Kanal-Korrektur. Im Prinzip ist das erfindungsgemäße Verfahren geeignet für die digitale Signalübertragung in Rahmen unter Verwendung einer Vielzahl von modulierten Trägern, eines Null-Symbols und eines Zeit-Frequenz-Phasen-Referenzsymbols, welches unter Verwendung von CAZAC-Sequenzen moduliert ist, wobei entweder innerhalb eines Rahmens mindestens ein weiteres Referenzsymbol übertragen wird, welches mit mindestens einer Pseudo-Zufalls-Sequenz moduliert ist, die eine größere Länge als irgendeine dieser CAZAC-Sequenzen hat

oder

dieses Zeit-Frequenz-Phasen-Referenzsymbol auch mit mindestens einer Pseudo-Zufalls-Sequenz moduliert ist, die eine größere Länge hat als irgendeine dieser CAZAC-Sequenzen, wobei diese Sequenzen mit größerer Länge im wesentlichen bei den äußeren Trägern, d.h. bei den niedrigsten und bei den höchsten Trägerfrequenzen, angeordnet sind.

Vorteilhafte Weiterbildungen des erfindungsgemäßen Verfahrens ergeben sich aus den zugehörigen abhängigen Ansprüchen.

Im Prinzip enthält die erfindungsgemäße Vorrichtung zum Decodieren eines gemäß dem erfindungsgemäßen Verfahren übertragenen digitalen Signals:

- Demodulationsmittel zum Demodulieren des empfangenen Signals;
- nachfolgende Null-Signalanteil-Detektormittel zum Detektieren des Nullsymbols;
- OFDM-Decodermittel für das demodulierte empfangene Signal;
- digitale Synchronisations-Auswertmittel für das demodulierte empfangene Signal, die durch ein Ausgangssignal der Null-Signalanteil-Detektormittel gesteuert sind und die die OFDM-Decodermittel steuern und die außerdem auswerten

entweder

das weitere Referenzsymbol, welches mit mindestens einer Pseudo-Zufalls-Sequenz moduliert ist, die eine größere Länge hat als irgendeine der CAZAC-Sequenzen hat,

oder

das Zeit-Frequenz-Phasen-Referenzsymbol, welches auch mit mindestens einer Pseudo-Zufalls-Sequenz moduliert ist, die eine größere Länge hat als irgendeine der CAZAC-Sequenzen, wobei diese Sequenzen mit größerer Länge im wesentlichen bei den äußeren Trägern, d.h. bei den niedrigsten und bei den höchsten Trägerfrequenzen, angeordnet sind.

Vorteilhafte Weiterbildungen der erfindungsgemäßen Vorrichtung ergeben sich aus den zugehörigen abhängigen Ansprüchen.

Zeichnungen

Anhand der Zeichnungen sind Ausführungs-Beispiele der Erfindung beschrieben. Diese zeigen in:

Fig. 1   Signalaufbau;
Fig. 2   Blockschaltbild für die Senderseite;
Fig. 3   Blockschaltbild für die Empfängerseite;
Fig. 4   Blockschaltbild für Empfänger-Synchronisation im Fall des n-Abstands;
Fig. 5   weiteres Blockschaltbild für Empfänger-Synchronisation;
Fig. 6   Anordnung von Synchronisations- und Referenzsymbolen und Pilotzellen in einem ersten Mode;
Fig. 7   Anordnung von Synchronisations- und Referenzsymbolen und Pilotzellen in einem zweiten Mode;
Fig. 8   weiteres Blockschaltbild eines erfindungsgemäßen Empfängers;
Fig. 9   detaillierteres Blockschaltbild für die digitale Synchronisation in Fig. 8;
Fig 10   Basis-CAZAC-Sequenz.

Ausführungs-Beispiele

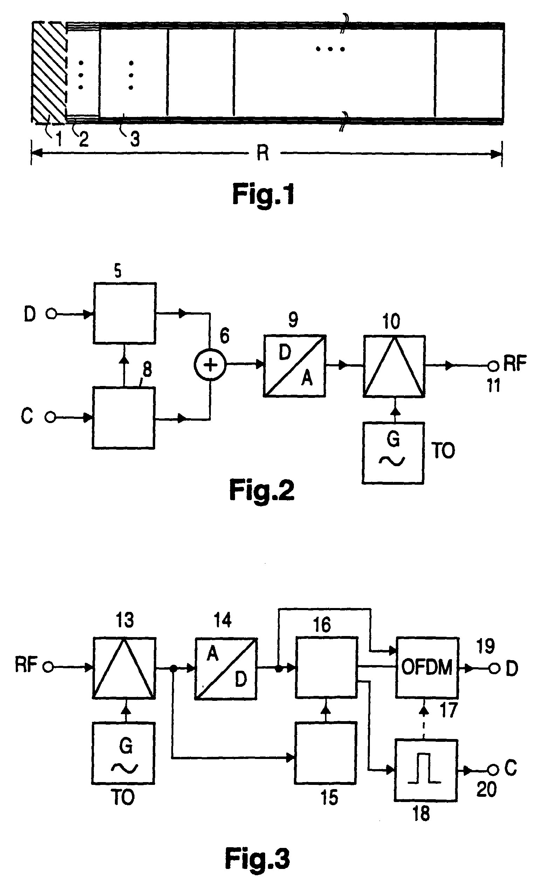

In Fig. 1 enthält der gesamte Rahmen R zunächst den schraffiert dargestellten Anteil 1 mit Leistung 0 oder annähernd 0, darauf den Signalanteil 2 des Synchronisations-Symbols mit der vom Nutzsignal abweichenden Modulation, wobei 1+2 das gesamte Syncsymbol darstellen. Darauf folgt der Abschnitt 3 mit den OFDM-Symbolen für die Nutzdaten. Im OFDM-Signalgenerator 5 der Fig. 2 wird mit Hilfe des Nutzdatenstromes D (z.B. Fernseh-Bilddaten) ein OFDM-Basisbandsignal erzeugt. In der Syncstufe 8 wird aus dem Taktsignal C das Synchronisations-Symbol, bestehend aus dem Nullanteil und dem Signalanteil (Sequenz), im Basisband erzeugt. Die Synchronität zwischen den Signalen der Stufen 5 und 8 wird dadurch hergestellt, daß ein aus der Stufe 8 stammendes Takt- und Fenstersignal den Signalablauf in der Stufe 5 steuert. Die beiden erzeugten Basisbandsignalanteile werden in der Addierstufe 6 zusammengefügt. Das Ausgangssignal der Addierstufe 6, enthaltend das OFDM-Signal und das Syncsymbol, wird über den D/A-Wandler 9 dem Modulator 10 zugeführt. Dieser liefert an der Klemme 11 das modulierte RF-(Radiofrequenz)-Signal. Dem Modulator 10 wird von dem Trägeroszillator TO das zu modulierende Trägersignal zugeführt.

In der Demodulatorstufe 13 von Fig. 3 wird das empfangene RF-Signal mit Hilfe des vom Oszillator TO kommenden Signals in die Basisbandlage heruntergemischt. Das Ausgangssignal der Stufe 13 gelangt einmal auf den A/D-Wandler 14 und zum anderen auf die Schaltung 15 zur Auswertung des Nullanteils, deren Ergebnis zur Steuerung der Auswertung des Signalanteils des Synchronisationssymbols in einer digitalen Synchronisier-Stufe 16 verwendet wird. Diese erhält dazu das Ausgangssignal des A/D-Wandlers 14, das außerdem noch auf die OFDM-Signalverarbeitungsschaltung 17 gegeben wird. Der Rahmenstart- und Symbolfenster-Ausgang der Stufe 16 steuert die Schaltung 17. Außerdem steuert der Synchronisationsanteil des Ausgangssignals den Taktgenerator 18, der wiederum die erforderlichen Steuersignale für die Schaltung 17 erzeugt. An der Klemme 19 steht dann wieder das Datensignal D und an der Klemme 20 das Taktsignal C für die Zeitsteuerung der Wiedergabschaltung zur Verfügung.

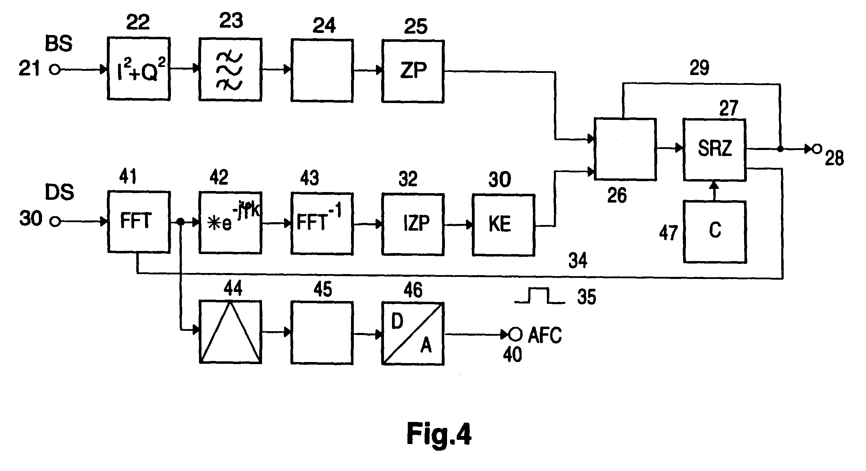

Fig. 4 zeigt ein Blockschaltbild für die Emfänger-Synchronisation. Das Basisbandsignal BS gelangt von der Klemme 21 an den Eingang der $I^2+Q^2$-Stufe 22, deren Ausgang über das Filter 23 und den Komparator 24 an den Eingang der Schaltung 25 für die zeitliche Positionierung angeschlossen ist. Dabei werden die Quadrate der Signalanteile I und Q aufsummiert, gefiltert und im Komparator 24 mit einem Schwellwert verglichen. Das Ergebnis ist ein dem Nullanteil entsprechender Synchronisationsimpuls, zu dem in der Schaltung 25 vorläufige Zeitpunkte für den Rahmenstart und für die Symbolfenster bestimmt werden. Das Ausgangssignal der Schaltung 25 gelangt auf den ersten Eingang der Schaltung 26 für die Sync-Überwachung, deren Ausgang an den Eingang des Symbol/Rahmen-Zählers 27 angeschlossen ist. Das digitale Syncsymbol DS gelangt von der Klemme 30 an den Eingang des Korrelators 31, in dem, zeitlich gesteuert durch das Fenstersignal 35, die Korrelation von empfangener Datenfolge und gespeicherter Sollsequenz durchgeführt wird. Das Ergebnis ist eine die Kanalstoßantwort repräsentierende zeitliche Folge von Datenwerten. Mit diesem Signal erfolgt in der Integrations-und Positionier-Schaltung 32 eine genaue zeitliche Positionierung des Rahmenstarts und der Symbolfenster. Je nachdem, ob das Signal zeitlich gegenüber dem des Vorrahmens vor oder nacheilt, wird eine entsprechende Stellinformation in der Stufe 33 gebildet und über die Syncüberwachungsschaltung 26 an den Rahmenzähler weitergegeben. Die Ausgangsklemme 28 der Schaltung 27 liefert das Signal für den Rahmenstart und das Symbolfenster und ist außerdem über die Leitung 29 auf einen weiteren Eingang der Schaltung 26 rückgekoppelt. Ein zweiter Ausgang der Schaltung 27 liefert über die Leitung 34 das Fenstersignal 35 für den Korrelator 31. An den Steuereingang 36 der Schaltung 27 ist das Taktsignal C vom Clockgenerator angelegt.

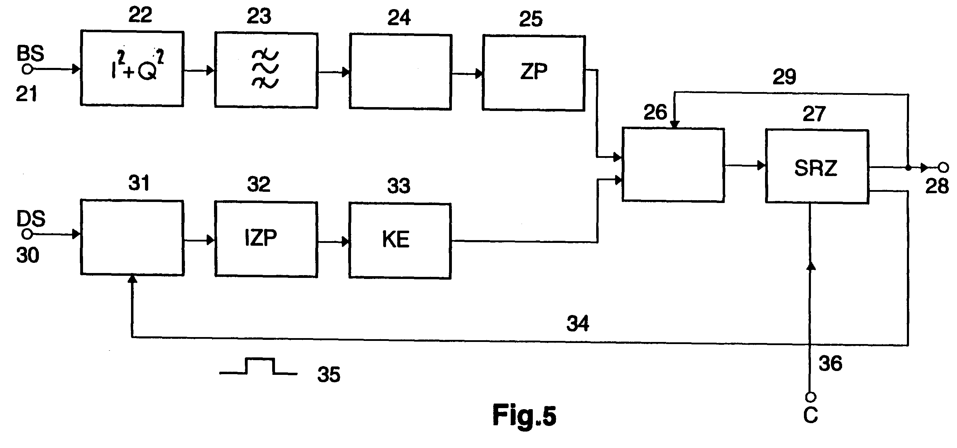

In Fig. 5 gelangt das Basisbandsignal BS von der Klemme 21 an den Eingang der $I^2+Q^2$-Stufe 22, deren

Ausgang über das Filter 23 und den Komparator 24 an den Eingang der Schaltung 25 für die zeitliche Positionierung angeschlossen ist. Dabei werden die Quadrate der Signalanteile I und Q aufsummiert, gefiltert und im Komparator 24 mit einem Schwellwert verglichen. Das Ergebnis ist ein dem Nullanteil entsprechender Synchronisationsimpuls, zu dem in der Schaltung 25 vorläufige Zeitpunkte für den Rahmenstart und für die Symbolfenster bestimmt werden. Das Ausgangssignal der Schaltung 25 gelangt auf den ersten Eingang der Schaltung 26 für die Sync-Überwachung, deren Ausgang an den Eingang des Symbol/Rahmen-Zählers 27 angeschlossen ist.

Das digitalisierte Syncsignal DS von der Klemme 30 wird durch die FFT-Schaltung 41 in eine Darstellung im Frequenzbereich transformiert, dann in der Stufe 42 mit der entsprechenden, im Empfänger gespeicherten Sollsequenz konjugiert-komplex multipliziert, was real einer Division entspricht. Anschließend wird in der FFT$^{-1}$-Stufe 43 das Ergebnis der Stufe 42 wieder in die Zeitdarstellung zurücktransformiert. Das Signal vom Ausgang der Stufe 43 gelangt auf die Stufe 32, die eine Integration und zeitliche Positionierung bewirkt. Das Signal vom Ausgang der Stufe 32 gelangt auf die Stufe 30 zur Korrektur-Ermittlung und wird dann dem zweiten Eingang der Stufe 26 zugeführt. Das Signal vom Ausgang der Stufe 41 gelangt außerdem auf den Differenz-Demodulator 44 und nach der über der Frequenz bzw. Trägerfolge durchgeführten Differenzdemodulation auf den Korrelator 45. Das Ausgangssignal des Korrelators 45 wird im D/A-Wandler/Filter 46 in ein an der Klemme 40 stehendes AFC-Signal umgewandelt und zur Frequenznachstellung des lokalen Oszillators benutzt.

Der Symbol/Rahmen-Zähler 27 wird von dem Taktgenerator 47 mit dem Taktsignal gespeist. Ein Ausgang des Symbol/Rahmen-Zählers 27 liefert über die Leitung 34 den Sync-Symbol-Fenster-Impuls 35 an die FFT-Stufe 41. Über einen weiteren Ausgang des Zählers 27 wird das Steuersignal für Rahmenstart und Symbolfenster ausgekoppelt.

Im folgenden Teil der Beschreibung, der die Verteilung und die Modulation von Referenzsymbolen und Referenzzellen betrifft, trägt das Nullsymbol (oder das Symbol mit einem Null-Anteil) die Zahl '0', und die Daten und die Referenzsymbole eines Rahmens sind mit A = 1, B, C, D, E, F und G numeriert.

*Erster Mode:*

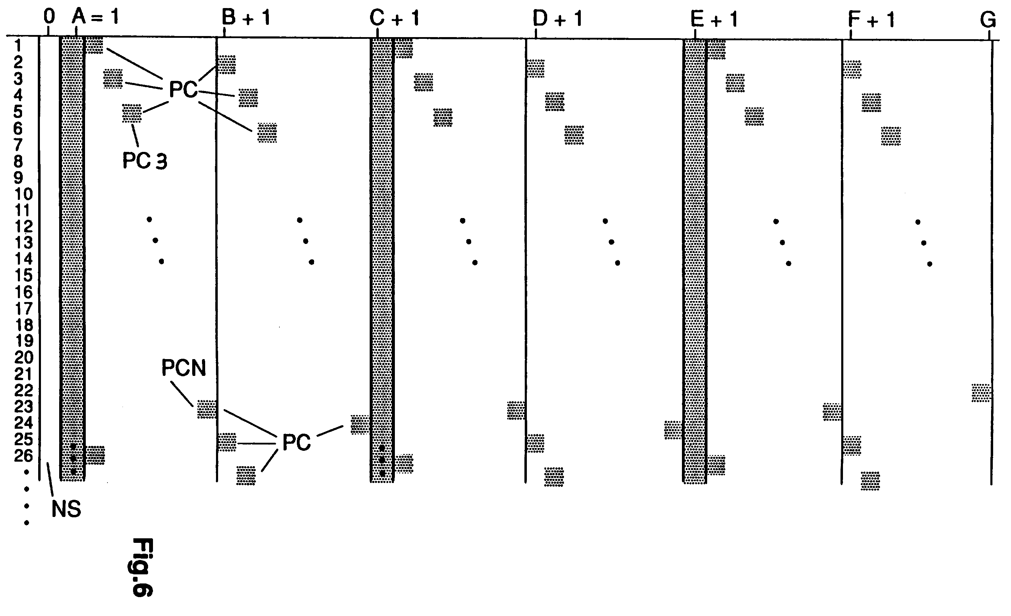

Fig. 6 zeigt in horizontaler Richtung Symbole innerhalb eines Rahmens sowie Träger Nummern 1...26... in vertikaler Richtung. Am linken Rand ist ein Null-Symbol NS für Synchronisierzwecke angeordnet. Die Symbole A, C+1 und E+1 dienen als Referenzsymbole. Pilotzellen PC sind in gleichmäßigen Abständen über die zweidimensionale Ebene angeordnet, d.h. die Sequenz von Pilotzellen ist zwischen PC3 und PCN entsprechend fortgesetzt. Es werden ungefähr 2000 Träger verwendet.

Jedes Referenzsymbol ist QPSK-moduliert mit einer Kombination von zwei M-Sequenzen (Sequenzen mit maximaler Länge) der Länge 255 und einem Satz von 44 verdoppelten CAZAC-Sequenzen der Länge (2-mal)16. Die M-Sequenzen sind gekennzeichnet durch die Generatorpolynome 717oct. und 747oct., differentiell encodiert und an den "äußeren" Teilen der Trägerlagen angeordnet (bei den niedrigsten und den höchsten Frequenzen). Die CAZAC-Sequenzen werden von einer Basis- oder Ursprungs-CAZAC-Sequenz durch Rotation mit n * π/2 abgeleitet, sowie durch differenzielle Codierung (über der Frequenz), durch Verdopplung (zweimal nacheinander dieselbe Frequenz) und durch Addition von Phasenverschiebungen von n-mal π/2. 22 dieser Sequenzen werden unterhalb und die anderen 22 Sequenzen oberhalb der Mittenfrequenz des Signals angeordnet.

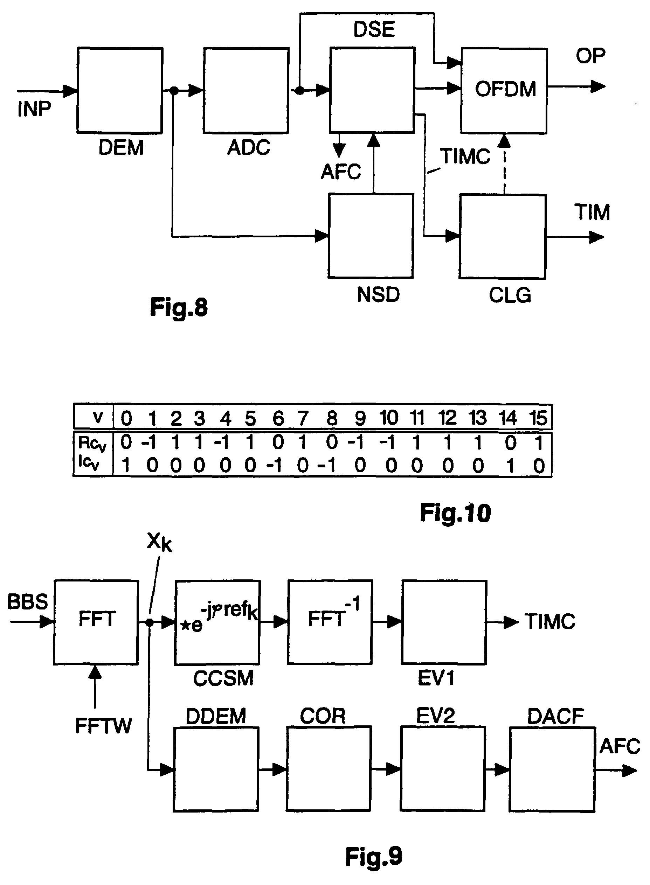

Figur 10 zeigt eine Basis/Ursprungs-CAZAC-Sequenz mit der Länge von 16, durch die der reale und der imaginäre Teil von $c_v$ definiert wird.

Die Anordnung in Paaren erlaubt es, im Empfänger eine Korrelation ohne Störung durch die (unterschiedlichen) Nachbar-Sequenzen durchzuführen. In diesem Fall wird nur der mittlere Teil der verdoppelten Sequenzen verwendet.

Ziel ist es, innerhalb des Zeitbereiches eine Einheits-Impulsantwort zu bekommen, die so sauber und definitiv wie möglich ist.

Der vollständige Satz von Sequenzen in jedem Referenzsymbol ist gekennzeichnet durch annähernd optimale Autokorrelations-Eigenschaften innerhalb eines Bereiches von ±20 Verschiebungen oder ±20 Trägern, wobei auch kritische Bedingungen, wie ein Offset mit der Hälfte des Trägerabstandes, berücksichtigt sind.

Die Positionen $i$ und $k$ der Pilotzellen $S_{i,k}$, wobei $i$ die Symbolnummer und $k$ die Trägernummer ist, sind durch die folgenden Gleichungen definiert:

1. Satz:

$$i = (n)\mathrm{mod}(L-1) + L^*m + 2; \qquad k = 2^*n + 1$$

2. Satz:

$$i = (n + (L-1)/2)\mathrm{mod}(L-1) + L^*m + 2; \qquad k = 2^*n + 2$$

EP 0 717 894 B1

wobei $n = 0, 1, 2...M/2 - 1$; $n = 0, 1, 2$. L kann gleich C sein und M ist eine Zahl etwas kleiner als die Gesamtzahl der Träger. Zellen mit $i$=G+1 werden an derselben Trägerlage verschoben nach $i$=G, und Ergebnisse mit $k$>m werden weggelassen.

Die Pilotzellen werden moduliert unter Verwendung von festen Phasen und Amplituden, z.B. durch eine QPSK-Modulation.

Die Modulation kann identisch mit der der Referenzsymbole gewählt werden, was bedeutet, daß jede Zelle an der Position des Trägers $k$ dieselbe Modulation hat wie die Zelle an der Position des Trägers $k$ im Referenzsymbol. Der Gesamtbetrag an definierten Zellen hat eine Kapazität von z.B. (G+1)/L vollen Symbolen. Das ergibt einen Gesamtbetrag von einer entsprechend verdoppelten Anzahl von Symbolen für die Referenzsignale und ein zusätzliches Symbol, falls das Nullsymbol in diese Anzahl eingeflossen ist.

*Zweiter Mode:*

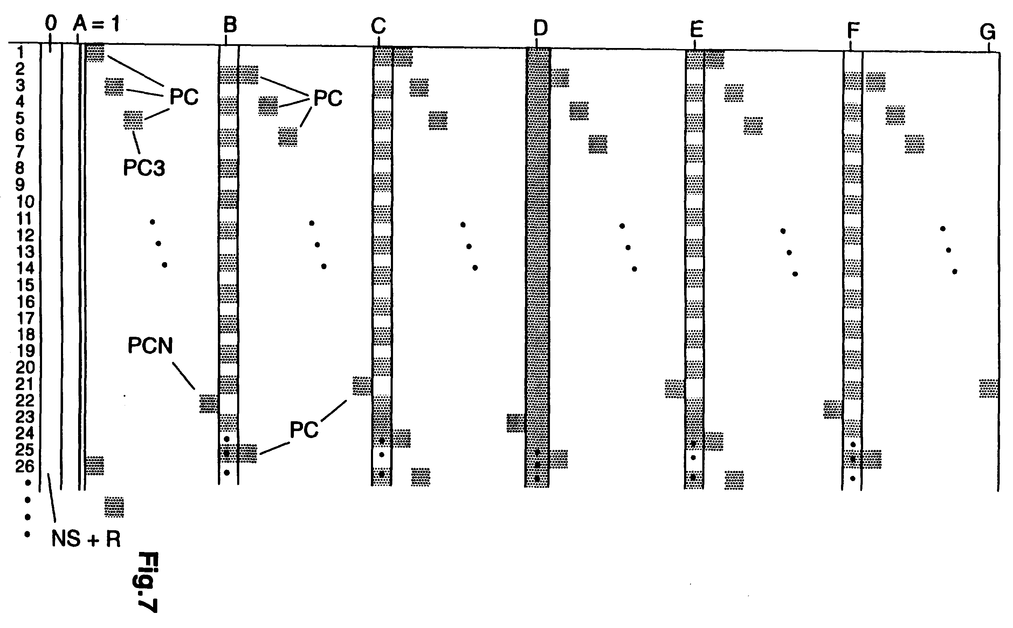

Fig. 7 zeigt in horizontaler Richtung Symbole innerhalb eines Rahmens und Trägernummern 1...26... in vertikaler Richtung. Am linken Rand ist ein erstes Symbol NS+R angeordnet. Pilotzellen PC sind in regelmäßigen Abständen über die zweidimensionale Ebene verteilt, d.h. die Sequenz von Pilotzellen wird zwischen PC3 und PCN entsprechend fortgesetzt. Es werden z.B. ungefähr 8000 Träger verwendet.

Das erste Symbol NS+R (Nummer 0) wird aufgespalten in zwei Zeitbereiche, einen Teil mit Leistung 0 (Nullsignal-Anteil) und einen aktiven Teil, der das OFDM-modulierte (Referenz-)Signal mit der halben Länge der OFDM Datensymbole enthält. Demgemäß wird der Trägerabstand verdoppelt, was in ungefähr 4000 Trägern resultiert. Der aktive Teil des Symbols 0 und teilweise die Symbole B, C, D, E, F werden als Referenzsymbol verwendet. Die Verwendung der Träger, numeriert von 1 bis z.B. 8000 - innerhalb dieser Symbole ist folgendermaßen:

- aktiver Teil des Symbols 0: alle Träger (Abstand verdoppelt); Positionen identisch zu denjenigen der ungeradzahligen Träger in den anderen Symbolen;
- Symbole B und F: geradzahlige Träger;
- Symbole C und E: ungeradzahlige Träger;
- Symbol D: alle Träger.

Die übrigen Zeitschlitze oder Zellen der Referenzsymbole werden für die Übertragung der Signaldaten (Benutzerdaten) verwendet. Das entspricht der Verwendung der Kapazität von (G+1)/L (vollen) Symbolen pro Rahmen - wobei der von dem Symbol 0 abgeleitete Signalteil nicht mitgezählt wird oder als Nullsymbol in die Rechnung einbezogen wird. Auf diese Weise ist der Overhead für die Referenzsymbole derselbe wie in dem oben beschriebenen 1. Mode.

Der aktive Teil der Symbole O und D wird mittels QPSK moduliert mit einer Kombination von M-Sequenzen (Sequenzen von maximaler Länge) mit der Länge 511 sowie einem Satz von CAZAC-Sequenzen mit der Länge 16. Für Symbol 0 werden zwei M-Sequenzen und 88 verdoppelte CAZAC-Sequenzen verwendet; die entsprechenden Werte für das Symbol D sind vier M-Sequenzen und 176 doppelte CAZAC-Sequenzen. Die verbleibenden Referenzsymbole B, C, E und F werden mit festen Phasen und Amplituden moduliert, z.B. durch eine QPSK-Modulation.

Die M-Sequenzen können die Generator-Polynome 1725oct., 1257oct., 1423oct. und 1443oct. verwenden, die differentiell (über die Frequenz) encodiert und am äußeren Teil der Trägerpositionen (niedrigste und höchste Frequenzen) angeordnet sind. Die CAZAC-Sequenzen werden so abgeleitet, wie es in Verbindung mit dem 1. Mode beschrieben ist. Diese Sequenzen werden symmetrisch unterhalb und oberhalb der Mittenfrequenz des Signals angeordnet. Der komplette Satz von Sequenzen im ersten Referenzsymbol ist gekennzeichnet durch annähernd optimale Autokorrelations-Eigenschaften innerhalb eines Bereiches von mindestens ±40 Verschiebungen entsprechend ±80 Trägern mit einem Abstand von 1kHz, wobei auch kritische Bedingungen wie Offsets mit halbem Trägerabstand berücksichtigt sind. Ähnliche Bedingungen werden erfüllt durch das Referenzsymbol mit der Zahl D. Die verwendeten Basis-Sequenzen und die Ursprungs-Sequenz sind dieselben wie für den 1. Mode. Die Anordnung innerhalb der Symbole kann variieren.

In Fig. 8 wird ein empfangenes oder vorher empfangenes und gespeichertes Eingangssignal INP in einer Demodulatorschaltung DEM demoduliert. Die Zeitsynchronisierung im Empfänger beginnt mit der Detektion des Null-Symbols in einem nachfolgenden Null-Signalanteil-Detektor NSD, der eine Hüllkurvenberechnung, eine angepaßte Filterung und eine Zentrums-Berechnung durchführt. Dies kann entweder durch eine analog/digitale oder durch eine rein digitale Verarbeitung erfolgen. Nach der A/D-Wandlung in ADC gelangt das Ausgangssignal des Demodulators DEM als Basisband-Signal BBS zu einem OFDM-Decoder OFDM, der das endgültige Ausgangssignal OP liefert, und zu einem digitalen Synchronisations-Auswerter DSE, der OFDM steuert und Steuerdaten an einen Taktgenerator CLG liefert. CLG taktet OFDM und die Ausgangs-Zeitsignale TIM.

7

In dem DSE werden gemäß Fig. 9 Zeit- und Frequenz-Synchronisation parallel in der Frequenz-Ebene durchgeführt. Die FFT-Verarbeitung (fast Fourier transform) in der Schaltung FFT wird mit einem Fenster begonnen, basierend auf dem detektierten Nullsymbol oder einem Null-Signalanteil. In dem Teil für die Zeitsynchronisierung gelangen die Signale $X_k$ von FFT über einen konjugiert-komplexen Sequenz-Multiplizierer CCSM und eine inverse FFT-Schaltung $FFT^{-1}$ zu einer ersten Auswerteschaltung EV1. Das erste Referenzsymbol des Rahmens wird in diesen Schaltungen als Zeifreferenz ausgewertet. Der Vorgang kann als equivalent angesehen werden zu einer Korrelation im Zeitbereich und liefert die Kanal-Impulsantwort. Die Lage des ersten oder Haupt-Impulses TIMC relativ zu dem vorangehenden FFT-Fenster oder Rahmenbeginn wird für eine Feineinstellung FFTW des FFT-Fensters und des Taktgenerators CLG benutzt.

In EV1 liefert ein Rahmen-Synchron-Zähler, der durch die von der Kanal-Impulsantwort abgeleiteten Impulse gesteuert ist, den Rahmenbeginn und andere Zeitinformation TIMC, wobei z.B. Symbol-Anfänge, FFT-Fenster und der Abtasttakt durch Teilung der Zeitbereiche zwischen den Rahmen-Startpunkten abgeleitet werden.

Die Frequenzsynchronisierung beginnt mit einer Grob-Abschätzung des Frequenzversatzes des A/D-gewandelten und FFT-transformierten Basis-Bandsignals BBS. Das (transformierte) Signal $X_k$ wird im Differenzial-Demodulator DDEM differentiell decodiert und es wird in COR eine Korrelation des M-Sequenz-Anteils des Referenzsymbols mit den - z.B. in COR - gespeicherten Referenz-Sequenzen durchgeführt über mindestens ±20 Trägerverschiebungen von dem erwarteten Mittelpunkt aus. In einer nachfolgenden zweiten Auswerteschaltung EV2 werden die Ergebnisse von verschiedenen Sequenzen gemittelt. Die resultierende Abweichung des Maximums von dem erwarteten Mittelpunkt wird in D/A-Wandler DACF umgewandelt und gefiltert zu einem äquivalenten analogen Wert AFC und dann verwendet für eine Korrektur, z.B. des Offsets des Mischoszillator oder der Mischoszillatoren im HF-Teil vor dem Demodulator DEM. Diese Verfahrensschritte werden wiederholt, bis eine Abweichung von weniger als ±5 Trägern erreicht ist. Ein ähnlicher differenzieller Demodulations- DDEM und Korrelations-Prozess COR innerhalb der Frequenzebene, jedoch nunmehr mit dem CAZAC-Sequenzteil der Referenzsymbole und durchgeführt über ±7 Trägerverschiebungen, liefert einen ersten Näherungs-Frequenzoffset-Wert. Genauer gesagt werden die verschiedenen Bereiche - jeder mit zweimal derselben Sequenz - in die ursprüngliche Sequenz zurückgewandelt und (in EV2) gemittelt. Schließlich wird mit dem Ergebnis eine Korrelation durchgeführt.

Ein genauer Wert für die Frequenzabweichung wird durch einen modifizierten differenziellen Demodulationsvorgang und eine Fein-Korrelation/Berechnung erreicht. In diesem Fall werden nur zwei Korrelationsschritte in der Nähe der genauen Konstellation durchgeführt und diese zwei Ergebnisse werden benutzt, um die Freqeuenzabweichung zu berechnen. Die Information von beiden, der ersten Näherungs-Abschätzung und der Fein-Korrelation, wird

- in Kombination mit derjenigen der Grob-Abschätzung - D/A-gewandelt und gefiltert und zur Korrektur der Frequenzreferenz für den Mischoszillator oder die Mischoszillatoren verwendet.

Die Verfahrensschritte und die entsprechende mathematische Beschreibung werden nachfolgend als ein Beispiel für den 1. Mode angegeben. Es muß berücksichtigt werden, daß die Trägerlagen in diesem Fall entsprechend einem FFT-Bereich von 0 bis 2047 numeriert sind.
Die Frequenz-Abschätzung und -Korrektur erfolgt in zwei Schritten, einer Grob- und einer Näherungs-Auswertung und -Korrektur, wobei die letztere als eine kontinuierliche Frequenzregelung (AFC) angesehen werden kann. Zunächst erfolgt die differentielle Demodulation des empfangenen Referenzsymbols $U_k$ über die volle Länge:

$$V_k = U_{k+1}U_k^*;\ 65 \le k \le 1982$$

Daraufhin werden für die Grob-Auswertung die folgenden Berechnungen (oder Verfahrensschritte) durchgeführt:

$$W_{M1,l} = \sum_{m=0}^{254} V_{M1,m+65}Y'_{M1,(m-l)mod255};\ -25 \le l \le 25$$

$$W_{M2,l} = \sum_{m=0}^{254} V_{M2,m+1728}Y'_{M2,(m-l+63)mod\ 255};\ -25 \le l \le 25$$

$$W_{W,l} = \frac{1}{2}(W_{M1,l} + W_{M2,l})$$

Das Maximum von $|W_{W,l}|$ im Bereich $-25 \leq l \leq 25$ bestimmt den Wert von $l_{W,max}$.

Für die Näherungs-Auswertung werden die folgenden Berechnungen (oder Verfahrensschritte) durchgeführt:

- Aufspaltung der differenziell demodulierten Werte $V_{320}...V_{1727}$ in 44 Bereiche mit einer Länge 32 (22 unterhalb und 22 oberhalb des Zentrums);
- Rückumsetzung der 44 Bereiche entsprechend dem oben beschriebenen Modulationsschema in die Ursprungs-CAZAC-Sequenz, wobei die folgenden Phasenverschiebungen angewendet werden müssen:

  - $A ... D : 0$
  - $E ... H : \pi/2$
  - $I ... M : \pi$
  - $N ... Q : -\pi/2$

- Mittelung der entsprechenden Werte aller Bereiche; das Ergebnis ist 32 Werte breit;
- Auswerten

$$W_{N,l} = \sum_{m=0}^{15} V_m c^*_{(m-l)mod16} ; -7 \leq l \leq 7.$$

- Suche nach $W_{N,max} = max \, |W_{N,l}|$, welches bei $l_{N,max}$ liegt; mit diesem Ergebnis kann $\Delta f = l_{N,max} F_s$ berechnet werden;
- Auswahl von 44 Bereichen der Länge 32 aus den empfangenen Referenzsymbolwerten $U_k$; 22 unterhalb und 22 oberhalb eines neuen Mittelwerts, der von dem theoretischen Mittelpunkt durch Korrektur mit $l_{N,max}$ abgeleitet ist; Definieren der neuen gemittelten Werte als $U'_k$. Danach Auswertung unter Verwendung des Kontext von Fig. 5 für $c^*_m$ und $c^*_{(m+1)mod16}$:

$$V'_l = U'_{l+1}U'^*_{l+1} + U'_{l+2}U'^*_l; 0 \leq l < 16$$

$$B = \sum_{m=0}^{15} V'_m c^*_m$$

$$C = \sum_{m=0}^{15} V'_m c^*_{(m+1)mod16}$$

$$D = 2W_{N,l_{N,max}} - B$$

$$E = 2W_{N,l_{N,max}} - C$$

$$\Delta f = F_s\left(l_{N,max} + \frac{EC^* - DB^*}{EE^* + DD^*}\right)$$

Ein endgültiges Ergebnis $\Delta f$ wird durch Mittelung der 44 Ergebnisse berechnet: Die endgültigen $\Delta f$-Werte aller Referenzsymbole werden nach einer D/A-Wandlung und Filterung zur Steuerung des Referenzoszillators oder der Referenzoszillatoren im HP-Teil in der oben beschriebenen Weise verwendet.

Entsprechende Basisformeln werden für den 2. Mode benutzt, wobei die Parameter des M-Sequenz-Auswertungsteils adaptiert werden müssen (M1...M4 und entsprechende Korrelations-Bereiche) entsprechend der in Fig. 2 dargestellten Rahmenstruktur.

Eine kohärente OFDM-Demodulation im Empfänger erfordert eine Phasenkorrektur aller empfangenen und abwärts-gewandelten Trägersignale. Die Korrektur beruht auf einer Abschätzung des Kanalstatus. Der folgende Abschätzungsvorgang basiert auf der Auswertung der Referenzsymbole und der Pilotzellen.

Um den Einfluß von Rauschen zu verringern, können die empfangenen Werte des Referenzsymbols in zwei Richtungen oder Dimensionen gemittelt/gefiltert werden: Zeit und Frequenz. Die endgültige Wahl ist abhängig von dem Verhalten des Kanals, das durch die Laufzeit-Streubreite und die Geschwindigkeit von Parameter-Änderungen charakterisiert ist.

Im 1. Mode kann eine ausreichende Filterung durch alleinige Anwendung in der Zeitrichtung realisiert werden (Cut-off-Frequenzen bis 20Hz). Z.B. kann ein Filter mit viermal der Länge der Zwischenräume zwischen den Referenzsymbolen oder mit ±2 Zwischenräumen vom relevanten Mittelpunkt aus benutzt werden.

Nach einer Filterung in Zeitrichtung werden die Werte interpoliert, um die erforderlichen Referenzwerte für alle Datensymbole/Werte zu gewinnen, wobei ein Interpolationsverfahren mit der Ordnungszahl drei (vier Referenzpunkte) angewendet wird. Schließlich werden die empfangenen Datenwerte korrigiert entsprechend der Abweichung der empfangenen Referenzwerte von dem festgelegten Wert.

Im 1. Mode werden die folgenden Verfahrensschritte durchgeführt:

a) Die Abweichungen $ar_{ref,k}$ der empfangenen Amplituden der Referenzsymbole und der Pilotzellen und Phasen $\phi r_{ref,k}$ von den gespeicherten Werten $a_{ref,k}$ und $\phi_{ref,k}$ müssen getrennt für jeden Träger berechnet werden:

$$r_{k,ref} = \frac{a_{k,ref}}{a_{k,ref}} \quad ; \quad \Delta\varphi_{k,ref} = \varphi_{k,ref} - \varphi_{k,ref}$$

Die Filterung der Abweichungen ergibt neue Abweichungswerte:

$$r'_{k,ref} = \frac{1}{2.5}(-0.25 r_{k,ref-2d} + r_{k,ref-d} + r_{k,ref} + r_{k,ref+d} - 0.25 r_{k,ref+2d})$$

Dieselbe Formel wird benutzt, aber anstelle von $r_{k,ref}$ wird der Wert $\Delta\phi_{k,ref}$ für die Berechnung von $\Delta'\phi_{k,ref}$ herangezogen. Die Filterung ist linear bis ≈20Hz, wodurch Niederfrequenz-Störkomponenten des Mischoszillators oder der Mischoszillatoren oder Kanal-Änderungsraten bis zu diesem Wert vollständig umfaßt werden.

Die Filterungsvorgänge erfordern, daß ein bestimmter Betrag an empfangenen Daten im Empfänger gespeichert wird, nämlich 2/3 eines Rahmens für das vorgeschlagene Filter.

b) Eine Interpolation dritter Ordnung wird benutzt für die Berechnung der relevanten Korrekturwerte $r_{k,i}$ und $\phi_{k,i}$ für die Datensymbole, wobei $i$ die Lage zwischen den Referenzpunkten "$k,ref+d$" und "$k,ref$" definiert. Die Formeln sind nachfolgend angegeben ($C_0...C_3$ sind Zwischenergebnisse) :

$$C0_{k,ref} = r'_{k,ref}$$

$$C1_{k,ref} = \frac{1}{6d}(-r'_{k,ref+2d} + 6r'_{k,ref+d} - 3r'_{k,ref} - 2r'_{k,ref-d})$$

$$C2_{k,ref} = \frac{1}{2d^2}(r'_{k,ref+d} - 2r'_{k,ref} + r'_{k,ref-d})$$

$$C3_{k,ref} = \frac{1}{2d^3}(r'_{k,ref+2d} - 3r'_{k,ref+d} + 3r'_{k,ref} - r'_{k,ref-d})$$

$$r_{k,i} = C0_{k,ref} + C1_{k,ref} \cdot (i-ref) + C2_{k,ref} \cdot (i-ref)^2 + C3_{k,ref} \cdot (i-ref)^3$$

$$d = 25 \quad ; \quad ref < i < ref+d.$$

# Dieselben Formeln, aber nunmehr mit den Phasenwerten $\Delta'\phi_{k,ref}$ anstelle von $r'_{k,ref}$, werden für die Berechnung von $\Delta\phi_{k,i}$ benutzt.

Die Ergebnisse von beiden, dem Referenzsymbol- und dem Pilotzellen-Verfahren mit denselben Indizes, werden gemittelt und ergeben die endgültigen Korrekturwerte r$res_{k,i}$ and $\Delta\phi res_{k,i}$.

Die Genauigkeit der Interpolation ist besser als 1% für die höchsten Frequenzen, die in dem Filterungsverfahren bearbeitet werden können.

Der Anzahl an Berechnungen, der für die Interpolation notwendig ist, ist ziemlich hoch. Um die Rechen-Anforderungen zu verringern, kann ein Satz von entsprechend berechneten Interpolationskurven im Empfänger gespeichert werden. In diesem Fall müssen nur die Daten für die Adressierung derartiger gespeicherter Kurven berechnet werden. Die notwendige Speicherkapazität sollte 50kByte nicht übersteigen.

c) Die empfangenen Datenwerte können durch Anwendung der folgenden Formeln korrigiert werden :

$$a_{k,i} = \frac{a_{k,i}}{r res_{k,i}} \qquad ; \qquad \varphi_{k,i} = \varphi_{k,i} - \Delta\varphi res_{k,i}$$

Im 2. Mode werden die zugehörigen Verfahrensschritte entsprechend durchgeführt.

Die Erfindung kann für die Übertragung, insbesondere terrestrische Übertragung, von z.B. digitalem Fernsehen, digitalem Audio oder anderen Datensignalen verwendet werden.

**Patentansprüche**

1. Verfahren zur Übertragung eines digitalen Signals in Rahmen unter Verwendung einer Vielzahl von modulierten Trägern (1...26...), einem Nullsymbol (NS) und einem Zeit-Frequenz-Phasen-Referenzsymbol, welches unter Verwendung von CAZAC-Sequenzen moduliert ist, **dadurch gekennzeichnet,** daß innerhalb eines Rahmens zusätzlich mindestens ein weiteres Referenzsymbol übertragen wird, das mit mindestens einer Pseudo-Zufalls-Sequenz moduliert ist, die eine größere Länge als irgendeine der CAZAC-Sequenzen hat und empfängerseitig nach einer Grobsynchronisation mittels des Nullsymbols eine verbesserte Korrektur bei größeren Frequenzabweichungen der Oszillatorfrequenz oder der Senderfrequenz erlaubt.

2. Verfahren nach Anspruch 1, wobei das weitere Referenzsymbol als ein weiteres Zeit-Frequenz-Phasen-Referenzsymbol verwendet wird.

3. Verfahren nach Anspruch 1, wobei das Zeit-Frequenz-Phasen-Referenzsymbol auch mit der mindestens einen Pseudo-Zufalls-Sequenz (A, B, C, D, E, F) moduliert ist und diese Pseudo-Zufalls-Sequenz bzw. -Sequenzen im wesentlichen bei den äußeren Trägern, d.h. bei den niedrigsten und bei den höchsten Trägerfrequenzen, angeordnet ist bzw. sind.

4. Verfahren nach einem oder mehreren der Ansprüche 1 bis 3, wobei das Nullsymbol (NS+R) aufgespalten ist in einen Teil mit Null-Leistung und in einen Teil, der als Referenzsymbol dient.

5. Verfahren nach einem oder mehreren der Ansprüche 1 bis 4, wobei die Symbole unter Verwendung von QPSK oder QAM Trägern (1...26...) aufmoduliert sind.

6. Verfahren nach einem oder mehreren der Ansprüche 1 bis 5, wobei die Pseudo-Zufalls-Sequenzen vor der Modulatian, vorzugsweise einer QPSK-Modulation, differenziell codiert sind.

7. Verfahren nach einem oder mehreren der Ansprüche 1 bis 6, wobei für die Pseudo-Zufalls-Sequenzen, die M-Sequenzen sein können, eine Maximallänge ausgewählt ist.

8. Verfahren nach einem oder mehreren der Ansprüche 1 bis 7, wobei für die empfängerseitige Bestimmung des Kanalstatus und für eine nachfolgende Kanalkorrektur die Referenzsymbole zusammen mit weiteren speziellen Symbolen oder Pilotzellen (PC) angewendet werden - definiert durch einen Träger und einen Zeitschlitz oder Zeitsymbol, d.h. die nur einen Teil der Träger bei bestimmten Zeitperioden einnehmen.

9. Verfahren nach einem oder mehreren der Ansprüche 1 bis 8, wobei die Pseudo-Zufalls-Sequenzen empfängerseitig unter Verwendung einer FFT (FFT), einer differenziellen Demodulation (DDEM) und einer Korrelation (COR) ausgewertet werden.

10. Verfahren nach Anspruch 9, wobei das Auswertungsergebnis und das empfängerseitige Auswertungsergebnis von den CAZAC-Sequenzen zur Frequenzkorrektur mindestens eines Oszillators, der empfängerseitig für die Frequenzumsetzung verwendet wird, dient und/oder zur Korrektur eines empfängerseitigen Referenzoszillators dient, der in Verbindung mit PLL-gesteuerten Oszillatoren arbeitet.

11. Verfahren nach Anspruch 9 oder 10, wobei, wenn die Pseudo-Zufalls-Sequenzen ausgewertet werden, um Abweichungen der Normalfrequenz des Empfänger-Oszillators zu bestimmen und zu korrigieren oder um Abweichungen der Senderfrequenz bezüglich des empfängerseitigen Frequenzrasters oder des Senderfrequenz-Offsets zu korrigieren, die Pseudo-Zufalls-Sequenzen weiterhin ausgewertet werden, nachdem die erforderliche Oszillator- oder Frequenz-Umsetzgenauigkeit erreicht ist, jedoch keinen Einfluß mehr haben, solange eine festgelegte Frequenz-Abweichung nicht überschritten wird.

12. Vorrichtung zum Decodieren eines digitalen Signals, welches in Rahmen unter Verwendung einer Vielzahl von modulierten Trägern (1...26...), einem Nullsymbol (NS) und einem Zeit-Frequenz-Phasen-Referenzsyinbol übertragen und unter Verwendung von CAZAC-Sequenzen moduliert ist, enthaltend:

- Demodulationsmittel (DEM) zum Demodulieren des empfangenen Signals (INP);
- nachfolgende Null-Signalteil-Detektormittel (NSD) zum Detektieren des Null-Symbols (NS, NS+R);
- OFDM-Decodermittel (OFDM) für das demodulierte empfangene Signal,
  **gekennzeichnet** durch:
- digitale Synchronisations-Auswertmittel (DSE) für das demodulierte empfangene Signal, die durch ein Ausgangssignal der Null-Signalteil-Detektormittel (NSD) gesteuert sind und die die OFDM-Decodermittel (OFDM) steuern, wobei die Demodulationsmittel derart ausgebildet sind, daß nach einer Grobsynchronisation mittels des Nullsymbols in den Null-Signalteil-Detektormittel (NSD) eine Korrektur von größeren Frequenzabweichungen der Oszillatorfrequenz oder der Senderfrequenz erfolgt durch die Auswertung mindestens einer mitübertragenen Pseudo-Zufalls-Sequenz, die eine größere Länge als irgendeine der CAZAC-Sequenzen hat.

13. Vorrichtung nach Anspruch 12, in der die Pseudo-Zufalls-Sequenzen ausgewertet werden unter Verwendung von FFT-Mitteln (FFT), Mitteln (DDEM) zur differenziellen Demodulation und Korrelations-Mitteln (COR).

14. Verfahren zur Übertragung eines digitalen Signals in Rahmen unter Verwendung einer Vielzahl von modulierten Trägern und mit einem über die Bandbreite des Signals gespreizten Synchronisations-Symbol, wobei die Leistung des Signals während eines Null-Teils (1) der Symboldauer des Synchronisations-Symbols null oder nahezu null ist, **dadurch gekennzeichnet,** daß innerhalb eines Rahmens für einen Signal-Teil (2) des Synchronisations-Symbols eine von der im übrigen Teil (3) des Rahmens benutzten Modulation - insbesondere OFDM-Modulation - abweichende Modulation angewendet wird und daß im Signalteil des Synchronisations-Symbols wenigstens eine Bitsequenz mit optimalen Autokorrelations-Eigenschaften übertragen wird, und daß empfängerseitig nach einer Grobsynchronisation mittels des Null-Teils und nach einer Auswertung des empfangenen Signalteils des Synchronisations-Symbols mit der Bitsequenz eine genauere Festlegung des Zeitbereichs des Symbols bzw. der Symbole vorgenommen wird.

15. Verfahren nach Anspruch 14, bei dem bei halber effektiver Symbollänge nur jeder zweite Träger benutzt ist und die Informationsfolge der Bitsequenz den Trägern in der Reihenfolge von der niedrigsten zur höchsten Frequenz oder umgekehrt zugeordnet ist.

16. Verfahren nach Anspruch 15, wobei die Länge des Null-Teils (1) ungefähr der halben OFDM-Symboldauer entspricht.

17. Verfahren nach Anspruch 15 oder 16, wobei eine Sequenz mit einer kleineren als der maximal möglichen Länge gewählt und mehrmals übertragen wird.

18. Verfahren nach einem oder mehreren der Ansprüche 15 bis 17, bei dem bei mehrfacher Übertragung Varianten des gleichen Grundtyps verwendet werden und jede mindestens zweimal übertragen wird.

19. Verfahren nach einem oder mehreren der Ansprüche 15 bis 18, wobei im Fall von QPSK-Modulation die Sequenz nur in einem Teilkanal (I oder Q) übertragen wird und die Datenfolge im anderen Teilkanal konstant ist.

20. Verfahren nach einem oder mehreren der Ansprüche 15 bis 18, wobei im Fall von QPSK-Modulation die Sequenz in beiden Teilkanälen (I und Q), jedoch mit unterschiedlichem Vorzeichen (0 bzw. 1) übertragen wird.

21. Verfahren nach einem oder mehreren der Ansprüche 15 bis 20, wobei im Fall einer QAM oder einer Multiresolution-QAM die Modulation des Synchronisationssignals auf der untersten Ebene, d.h. auf QPSK-Basis erfolgt.

22. Verfahren nach einem oder mehreren der Ansprüche 15 bis 21, wobei während des Null-Teils (1) eine verminderte Anzahl von Trägern - zur Senderidentifikation - mit einer insgesamt so niedrigen Leistung übertragen wird, daß hierdurch die Detektion des Nullanteils im Empfänger nicht wesentlich beeinflußt wird.

23. Verfahren nach einem oder mehreren der Ansprüche 15 bis 22, wobei zur optimalen Wahl der Zusammenhänge zwischen Rahmenlänge, Anzahl der Nutzsymbole pro Rahmen und Abtastfolge eine von der Dauer der OFDM-Symbole leicht abweichende Länge des (gesamten) Synchronisations-Symbols gewählt wird, in dem der Nullanteil (1) etwas verkürzt oder verlängert ist.

24. Verfahren nach einem oder mehreren der Ansprüche 15 bis 23, wobei empfangsseitig der Synchronisations-Symbol-Signalanteil in den Frequenzbereich umgewandelt (41) wird, dann mit einer gespeicherten Sollsequenz konjugiert-komplex multipliziert (42) und wieder in den Zeitbereich rücktransformiert (43) wird und die resultierende Kanalstoßantwort zur genauen Festlegung (32, 30) des Zeitbereichs der Symbole benutzt wird.

25. Verfahren nach Anspruch 24, wobei mit dem in den Frequenzbereich transformierten Signal und der gespeicherten Sollsequenz eine Korrelation (45) durchgeführt wird und das Ergebnis eine Information über die Frequenzabweichung des in einem Empfänger in eine andere Frequenzlage, z.B. Basisband, umgesetzten Signals darstellt und dazu benutzt wird, den Oszillator des Frequenzumsetzers nachzusteuern (AFC).

26. Verfahren nach Anspruch 24 oder 25, wobei das in den Frequenzbereich transformierte Signal in Abschnitte entsprechend der Anordnung der übertragenen Sequenzen unterteilt wird und die Teilergebnisse der einzelnen Abschnitte auf das Format der Grundsequenz umgerechnet und gemittelt werden und eine Korrelation mit der gespeicherten Sollsequenz der Grundform der Sequenz durchgeführt wird, wobei das Ergebnis eine Information über die Frequenzabweichung des im Empfänger umgesetzten Signals darstellt und dazu benutzt wird, den Oszillator des empfängerseitigen Frequenzumsetzers nachzusteuern (AFC).

27. Verfahren nach einem oder mehreren der Ansprüche 24 bis 26, wobei die für jeden einzelnen Träger ermittelten Phasenwerte des Synchronisations-Symbols bei einer differentiellen Modulation/Demodulation (44) als Referenzwerte für die den Trägern aufmodulierten (nachfolgenden) Nutzinformationen benutzt werden bzw. bei einer kohärenten Modulation/Demodulation die Abweichungen von den vorgegebenen Sollphasenlagen des Synchronisationssymbols zur Korrektur des nachfolgend ermittelten Phasenlagen der Nutzinformationen benutzt werden.

28. Verfahren nach einem oder mehreren der Ansprüche 24 bis 27, wobei die Referenz- bzw. Korrekturwerte für die im Synchronsationssymbol nicht enthaltenen Träger durch Interpolation aus den Referenz- bzw. Korrekturwerten der benachbarten Träger gewonnen werden.

29. Verfahren nach Anspruch 14, wobei die Bitsequenz in einer in zeitlicher Folge definierten und auf einen zentral gelegenen Träger aufmodulierten Bitformation enthalten ist und der Abstand der Bits der Bitsequenz den bei der Abtastung oder Überabtastung der OFDM-Symbole verwendeten Zeitabständen oder einem Vielfachen dieser Zeitabstände entspricht.

30. Verfahren nach Anspruch 29, wobei eine Sequenz etwa einem Viertel der Länge des OFDM-Symbols entspricht.

31. Verfahren nach Anspruch 29 oder 30, wobei die Sequenz zweimal übertragen wird und vorzugsweise eine Länge von 512-1 hat.

32. Verfahren nach einem oder mehreren der Ansprüche 29 bis 31, wobei der Abstand der Bits der Sequenz dem n-fachen Wert der bei der Überabtastung der OFDM-Symbole verwendeten Zeitabstände entspricht bzw. die Werte der Sequenz bei definierter Abtastfolge jeweils n-mal nacheinander übertragen werden.

33. Verfahren nach einem oder mehreren der Ansprüche 29 bis 32, wobei empfangsseitig der Synchronisations-Symbol-Signalanteil mit einer gespeicherten Sollsequenz korreliert (31) wird und das Ergebnis eine Information über die Frequenzabweichung des in einem Empfänger in eine andere Frequenzlage, z.B. Basisband, umgesetzten Signals darstellt und dazu benutzt wird, den Oszillator des Frequenzumsetzers des Empfängers nachzusteuern (AFC), wobei bei der Korrelation nur jeder n-te Wert der mit unveränderter Folge durchgeführten Abtastung benutzt wird oder n Korrelationen mit um ein bis n Abtastintervalle versetzten Folgen, bei denen nur jeder n-te erhaltene Wert benutzt wird, durchgeführt werden und nur dasjenige Ergebnis mit dem höchsten Spitzenwert weiter benutzt wird.

34. Verfahren nach Anspruch 33, wobei die Korrelationen mit um ein bis n Abtastintervalle versetzten Folgen, bei denen nur jeder n-te erhaltene Wert benutzt wird, durchgeführt wird und die Ergebnisse der n Korrelationen gemittelt (32) werden.

35. Vorrichtung zum Decodieren eines digitalen Signals, welches in Rahmen unter Verwendung einer Vielzahl von modulierten Trägern und mit einem über die Bandbreite des Signals gespreizten Synchronisations-Symbol übertragen ist, wobei die Leistung des Signals während eines Null-Teils (1) der Symboldauer des Synchronisations-Symbols null oder nahezu null ist, enthaltend:

- Demodulationsmittel (13, TO) zum Demodulieren des empfangenen Signals (RF);
- nachfolgende Null-Signalteil-Detektormittel (15) zum Detektieren des Null-Teils (1);
- OFDM-Decodermittel (OFDM) für das demodulierte empfangene Signal,
  **gekennzeichnet** durch:
- digitale Synchronisations-Auswertmittel (16) für das demodulierte empfangene Signal, die durch ein Ausgangssignal der Null-Signalteil-Detektormittel (15) gesteuert sind und die die OFDM-Decodermittel (17) steuern (18), wobei in den Synchronisations-Auswertmitteln (16) in einer FFT-Schaltung (41) der Synchronisations-Symbol-Signalanteil in den Frequenzbereich umgewandelt wird, dann in einer weiteren Stufe (42) mit einer in der Vorrichtung gespeicherten Sollsequenz konjugiert-komplex multipliziert und in einer FFT$^{-1}$-Stufe (43) wieder in den Zeitbereich rücktransformiert wird und die resultierende Kanalstoßantwort zur genauen Festlegung (32, 30) des Zeitbereichs der Symbole benutzt wird.

## Claims

1. A method of transmitting a digital signal in frames using a plurality of modulated carriers (1...26...), a zero symbol (NS) and a time-frequency-phase reference symbol which is modulated by means of CAZAC sequences, characterised in that at least one further reference symbol is additionally transmitted within a frame, said further reference symbol being modulated by at least one pseudo random sequence which has a length greater than any of the CAZAC sequences and which, after a coarse synchronisation process effected by means of the zero symbol in the receiver, allows the correction process to be improved in the case of greater deviations in frequency of the oscillator frequency or the transmitter frequency.

2. A method in accordance with Claim 1, wherein the further reference symbol is used as a further time-frequency-phase reference symbol.

3. A method in accordance with Claim 1, wherein the time-frequency-phase reference symbol is also modulated by the at least one pseudo random sequence (A, B, C, D, E, F) and this or these pseudo random sequences is or are disposed substantially on the outermost carriers i.e. at the lowest and highest carrier frequencies.

4. A method in accordance with one or more of the Claims 1 to 3, wherein the zero symbol (NS + R) is split into one part of zero power and into another part serving as a reference symbol.

5. A method in accordance with one or more of the Claims 1 to 4, wherein the symbols are modulated using QPSK or QAM carriers (1...26...).

6. A method in accordance with one or more of the Claims 1 to 5, wherein the pseudo random sequences are differentially coded prior to modulation, preferably, a QPSK modulation process.

7. A method in accordance with one or more of the Claims 1 to 6, wherein a maximum length is selected for the pseudo random sequences which may be M- sequences.

8. A method in accordance with one or more of the Claims 1 to 7, wherein the reference symbols together with further special symbols or pilot cells (PC) are used in the receiver for determining the channel status and for a succeeding channel correction process, said further symbols being defined by a carrier and a time slot or time symbol i.e. which occupy only one part of the carrier at certain time periods.

9.  A method in accordance with one or more of the Claims 1 to 8, wherein the pseudo random sequences are evaluated in the receiver using an FFT (FFT), a differential demodulation (DDEM) and a correlation (COR) process.

10. A method in accordance with Claim 9, wherein the result of the evaluation and the result of the evaluation of the CAZAC sequences in the receiver serves for correcting the frequency of at least one oscillator which is used for frequency conversion purposes in the receiver, and/or, serves for correcting a reference oscillator in the receiver which functions in conjunction with PLL controlled oscillators.

11. A method in accordance with Claim 9 or 10, wherein, if the pseudo random sequences are evaluated for determining and correcting deviations in the normal frequency of the receiver oscillator or for correcting deviations in the transmitting frequency with respect to the frequency raster in the receiver or the transmitter frequency offset, the pseudo random sequences are evaluated further after the required precision for the oscillator or frequency conversion has been attained although this evaluation has no effect for as long as a defined frequency deviation is not exceeded.

12. A device for decoding a digital signal which is transmitted in frames using a plurality of modulated carriers (1...26...), a zero symbol (NS) and a time-frequency-phase reference symbol and which is modulated by means of CAZAC sequences, said device comprising:

-   demodulating means (DEM) for demodulating the received signal (INP);
-   subsequent zero signal component detecting means (NSD) for detecting the zero symbol (NS, NS+R);
-   OFDM decoding means (OFDM) for the demodulated received signal,
    characterised by:
    digital synchronisation evaluating means (DSE) for the demodulated received signal which are controlled by an output signal from the zero signal component detecting means (NSD) and which control the OFDM decoding means (OFDM), wherein the demodulating means are constructed such that, after a coarse synchronisation process effected by means of the zero symbol in the zero signal component detecting means (NSD), a correction process for greater frequency deviations of the oscillator frequency or the transmitter frequency is effected by evaluating at least one other simultaneously transmitted pseudo random sequence which has a length greater than any of the CAZAC sequences.

13. A device in accordance with Claim 12, in which the pseudo random sequences are evaluated using an FFT means (FFT), a differential demodulation means (DDEM) and a correlating means (COR).

14. A method of transmitting a digital signal in frames using a plurality of modulated carriers and incorporating a synchronisation symbol spread over the bandwidth of said signal, wherein the power of the signal is zero or virtually zero during a zero portion (1) of the duration of the symbol forming the synchronisation symbol, characterised in that a modulation process is used within a frame for a signal portion (2) of the synchronisation symbol which differs from the modulation process, in particular an OFDM process, used in the remaining portion (3) of the frame, and that at least one bit sequence having optimum auto-correlation properties is transmitted in the signal portion of the synchronisation symbol, and in that, after a coarse synchronisation process effected by means of the zero portion in the receiver and after an evaluation of the received signal portion of the synchronisation symbol with the bit sequence, a more precise determination of the time range of the symbol or symbols is effected.

15. A method in accordance with Claim 14, wherein only each second carrier is used in the case where the effective symbol lengths are halved, and the information train of the bit sequence is associated with the carriers in a sequence running from the lowest to the highest frequency or vice versa.

16. A method in accordance with Claim 15, wherein the length of the zero portion (1) corresponds approximately to half the duration of the OFDM symbol.

17. A method in accordance with Claim 15 or 16, wherein a sequence of less than the maximum possible length is selected and transmitted a plurality of times.

**18.** A method in accordance with one or more of the Claims 15 to 17, wherein, in the case of multiple transmission, variants of the same basic type are used and each is transmitted at least twice.

**19.** A method in accordance with one or more of the Claims 15 to 18, wherein, in the case of a QPSK modulation process, the sequence is only transmitted in a sub channel (I or Q) and the data train in the other sub channel is constant.

**20.** A method in accordance with one or more of the Claims 15 to 18, wherein, in the case of a QPSK modulation process, the sequence is transmitted in both sub channels (I and Q) but with differing prefix signs (0 or 1).

**21.** A method in accordance with one or more of the Claims 15 to 20, wherein, in the case of QAM or multi-resolution QAM, the modulation of the synchronisation signal is effected at the lowest level i.e. on the base QPSK.

**22.** A method in accordance with one or more of the Claims 15 to 21, wherein a reduced number of carriers - for transmitter identification purposes - is transmitted during the zero portion (1), said carriers being transmitted with a total power that is so low that the detection of the zero portion in the receiver is substantially unaffected thereby.

**23.** A method in accordance with one or more of the Claims 15 to 22, wherein a length of the (whole) synchronisation symbol deviating slightly from the duration of the OFDM symbols is selected for optimum choice in regard to the relationships between the frame length, the number of useful symbols per frame and the sampling order, the zero portion (1) being made somewhat shorter or longer in said synchronisation symbol.

**24.** A method in accordance with one or more of the Claims 15 to 23, wherein the synchronisation symbol signal component is converted (41) into the frequency domain in the receiver, then multiplied by a stored reference sequence in conjugate-complex manner (42), and then transformed back into the time domain (43), the resultant channel impulse response then being used for precisely defining (32, 30) the time range of the symbols.

**25.** A method in accordance with Claim 24, wherein a correlation process (45) is carried out with the signal transformed into the frequency domain and the stored reference signal, whereby the result thereof represents an item of information regarding the frequency deviation of the signal converted in the receiver into another frequency range e.g. the baseband, said result being used to control the oscillator of the frequency converter (AFC).

**26.** A method in accordance with Claim 24 or 25, wherein the signal transformed into the frequency domain is subdivided into sections corresponding to the ordering of the transmitted sequences and the partial results for the individual sections are converted into the format of the basic sequence and averaged, and a correlation process is carried out with the stored reference sequence for the basic form of the sequence, whereby the result represents an item of information regarding the frequency deviation of the signal converted in the receiver and is used to control (AFC) the oscillator of the frequency converter in the receiver.

**27.** A method in accordance with one or more of the Claims 24 to 26, wherein the phase values of the synchronisation symbol determined for each individual carrier in the case of a differential modulation/demodulation process (44) are used as reference values for the (succeeding) useful information modulated on the carriers, or, in the case of a coherent modulation/demodulation process, the deviations from the predefined reference phase angles of the synchronisation symbol are used for correcting the subsequently determined phase angles in respect of the useful information.

**28.** A method in accordance with one or more of the Claims 24 to 27, wherein the reference or correcting values for the carriers that are not included in the synchronisation symbol are obtained by interpolation from the reference or correcting values of the adjacent carriers.

**29.** A method in accordance with Claim 14, wherein the bit sequence is contained in an item of bit information defined in a timing sequence and modulated onto a centrally located carrier, and the spacing of the bits of the bit sequence corresponds to the time periods - or a multiple of those time periods - used for sampling or over-sampling the OFDM symbols.

**30.** A method in accordance with Claim 29, wherein a sequence corresponds to approximately one quarter of the length of the OFDM symbol.

**31.** A method in accordance with Claim 29 or 30, wherein the sequence is transmitted twice and preferably has a length of 512-1.

**32.** A method in accordance with one or more of the Claims 29 to 31, wherein the spacing of the bits in the sequence corresponds to the nth multiple value of the timing periods used when over-sampling the OFDM symbols, or, the values of the sequence are transmitted successively n- times in the case of a defined sampling order.

**33.** A method in accordance with one or more of the Claims 29 to 32, wherein the synchronisation symbol signal component is correlated (31) in the receiver with a stored reference sequence whereby the result thereof represents an item of information regarding the frequency deviation of the signal converted in the receiver into another frequency range e.g. the baseband, said result being used to control (AFC) the oscillator in the frequency converter, whereby only each nth value of the sampling process carried out using an unchanging sequence is used for the correlation process, or, n correlations are carried out with sequences displaced by between one and n sampling intervals whereby only every nth one of the values obtained is used and only that result having the highest peak value continues to be used.

**34.** A method in accordance with Claim 33, wherein the correlations is [sic] carried out with sequences displaced by between one and n sampling intervals whereby only every nth one of the values obtained is used and the results of the n correlations are averaged (32).

**35.** A device for decoding a digital signal which is transmitted in frames using a plurality of modulated carriers together with a synchronisation symbol that is spread over the bandwidth of the signal, whereby the power of the signal is zero or virtually zero during a zero portion (1) of the duration of the symbol forming the synchronisation symbol, said device comprising:

- demodulating means (13, TO) for demodulating the received signal (RF);
- subsequent zero signal component detecting means (15) for detecting the zero portion (1);
- OFDM decoding means (OFDM) for the demodulated received signal,
  characterised by:
- digital synchronisation evaluating means (16) for the demodulated received signal which are controlled by an output signal from the zero signal component detecting means (15) and which control (18) the OFDM decoding means (17), wherein the synchronisation symbol signal component is converted into the frequency domain in an FFT circuit (41) in the synchronisation evaluating means (16), and is then multiplied in a further stage (42) by a reference sequence stored in the device in conjugate-complex manner whereafter it is converted back into the time domain in an $FFT^{-1}$ stage (43), and the resultant channel impulse response is then used for precisely defining (32, 30) the time range of the symbols.

**Revendications**

**1.** Procédé de transmission d'un signal numérique en trames tout en utilisant un grand nombre d'ondes porteuses modulées (1... 26...), un symbole nul (NS) et un symbole de référence de phase à fréquence temporelle qui est modulé en utilisant des séquences CAZAC, **caractérisé en ce qu'**au moins un autre symbole de référence est transmis dans une trame modulée, ce symbole étant modulé avec au moins une séquence pseudo-aléatoire qui possède une durée plus élevée que la durée de chacune des séquences CAZAC et permet d'effectuer dans le récepteur une meilleure correction en cas de différences importantes de la fréquence d'oscillateur ou de la fréquence d'émetteur après une synchronisation globale à l'aide du symbole nul.

**2.** Procédé conforme à la revendication 1, dans lequel l'autre symbole de référence est utilisé comme un autre symbole de référence de phase à fréquence temporelle.

**3.** Procédé conforme à la revendication 1, dans lequel le symbole de référence de phase à fréquence temporelle est modulé avec au moins une séquence pseudo-aléatoire (A, B, C, D, E, F) et celle (ou ces) séquence(s) pseudo-aléatoire(s) est (sont) située(s) de préférence au niveau des ondes porteuses extérieures, c'est-à-dire au niveau des fréquences les plus basses et les plus élevées.

**4.** Procédé conforme à l'une ou à plusieurs des revendications 1 à 3, dans lequel le symbole nul (NS+R) est divisé en une partie à puissance nulle et en une partie qui sert de symbole de référence.

**5.** Procédé conforme à l'une ou à plusieurs des revendications 1 à 4, dans lequel les symboles sont modulés en utilisant des ondes porteuses QPSK ou QAM (1... 26...).

**6.** Procédé conforme à l'une ou à plusieurs des revendications 1 à 5, dans lequel les séquences pseudo-aléatoires sont codées de manière différentielle, avant la démodulation, de préférence une démodulation QPSK.

**7.** Procédé conforme à l'une ou à plusieurs des revendications 1 à 6, dans lequel une longueur maximale est sélectionnée pour les séquences pseudo-aléatoires, qui peuvent être des séquences M.

**8.** Procédé conforme à l'une ou à plusieurs des revendications 1 à 7, dans lequel les symboles de référence sont utilisés avec d'autres symboles spéciaux ou d'autres cellules pilotes (PC) spéciales - définis par une onde porteuse et une fenêtre temporelle ou un symbole temporel, donc ils ne reçoivent qu'une partie des ondes porteuses à des intervalles définis - pour déterminer, dans le récepteur, le statut du canal et pour effectuer une correction ultérieure de ce canal.

**9.** Procédé conforme à l'une ou à plusieurs des revendications 1 à 8, dans lequel les séquences pseudo-aléatoires sont évaluées dans le récepteur en utilisant une FFT (FFT), une démodulation différentielle (DEM) et une corrélation (COR).

**10.** Procédé conforme à la revendication 9, dans lequel le résultat de l'évaluation et le résultat de l'évaluation dans le récepteur des séquences CAZAC permettent d'effectuer la correction de fréquence d'au moins un oscillateur utilisé dans le récepteur pour la conversion des fréquences et/ou permet de rectifier dans le récepteur un oscillateur de référence qui fonctionne en connexion avec des oscillateurs commandés par PLL.

**11.** Procédé conforme à la revendication 9 ou 10, dans lequel, lorsque les séquences pseudo-aléatoires sont évaluées afin de déterminer et rectifier les écarts par rapport à la fréquence normale ou afin de rectifier les écarts de fréquence de l'émetteur par rapport à la trame de la fréquence ou par rapport au décalage de fréquence de l'émetteur, les séquences pseudo-aléatoires continuent à être analysées une fois que la précision de l'oscillateur et du changement de fréquence est atteinte, ce résultat n'ayant cependant aucun effet tant qu'un écart de fréquence défini n'est pas dépassé.

**12.** Dispositif de décodage d'un signal numérique transmis en trames tout en utilisant un grand nombre d'ondes porteuses modulées (1... 26...), un symbole nul (NS) et un symbole de référence de phase à fréquence temporelle et modulé en utilisant des séquences CAZAC, composé des éléments suivants :

- dispositifs de démodulation (DEM) permettant de démoduler le signal reçu (INP) ;
- détecteurs ultérieurs de la partie de signal nul (NSD) permettant de détecter le symbole nul (NS, NS+R) ;
- décodeurs OFDM (OFDM) pour le signal démodulé reçu,
**caractérisé on ce que**
- des dispositifs numériques d'analyse de la synchronisation (DES) pour le signal démodulé reçu, qui sont commandés par un signal de sortie des détecteurs de la partie de signal nul (NSD) et commandent les décodeurs OFDM (OFDM), les dispositifs de démodulation étant constitués de sorte qu'une correction des écarts plus élevés par rapport à la fréquence de l'oscillateur ou par rapport à la fréquence de l'émetteur est effectuée grâce à l'analyse d'au moins une séquence pseudo-aléatoire transmise, possédent une longueur supérieure à la longueur de chaque séquence CAZAC, après une synchronisation globale à l'aide du symbole nul dans le détecteur de la partie de signal nul (NSD).

**13.** Dispositif conforme à la revendication 12, dans lequel les séquences pseudo-aléatoires sont évaluées en utilisant des dispositifs FFT (FFT), des dispositifs de démodulation différentielle (DEM) et des dispositifs de corrélation (COR).

**14.** Procédé de transmission d'un signal numérique dans des trames en utilisant un grand nombre d'ondes porteuses modulées et possédant un symbole de synchronisation diffusé sur la largeur de bande, dans lequel la puissance du signal dans une partie nulle (1) de la durée du symbole de synchronisation est nulle ou pratiquement nulle, **caractérisé en ce que** dans une trame d'une partie signal (2) du symbole de synchronisation une modulation OFDM différente de la modulation utilisée dans la partie restante (3) de la trame peut être appliquée, **en ce qu'**au moins une séquence de bits possédant les caractéristiques optimales d'autocorrélation est transmise dans la partie signal du symbole de synchronisation **et en ce qu'**une définition plus précise de la plage temporelle du (ou des) symbole(s) est effectuée dans le récepteur après une synchronisation globale à l'aide de la partie nulle et après une analyse de la partie signal reçue concernant le symbole de synchronisation à l'aide de la séquence de bits.

**15.** Procédé conforme à la revendication 14, dans lequel seule une onde porteuse sur deux est utilisée dans le cas où la durée effective du symbole est divisée de moitié et dans lequel la suite d'informations relative à la séquence de bits est associée aux ondes porteuses dans la séquence qui va de la fréquence la plus basse à la fréquence la plus élevée ou inversement.

**16.** Procédé conforme à la revendication 15, dans lequel la longueur de la partie nulle (1) correspond environ à la moitié de la durée de symbole OFDM.

**17.** Procédé conforme à la revendication 15 ou 16, dans lequel une séquence possédant une longueur inférieure à la longueur maximale est sélectionnée et transmise plusieurs fois.

**18.** Procédé conforme à l'une ou à plusieurs des revendications 15 à 17, dans lequel des variantes du type de base sont utilisées pour une transmission répétée et chaque variante est transmise au moins deux fois.

**19.** Procédé conforme à l'une ou à plusieurs des revendications 15 à 18, dans lequel la séquence est uniquement transmise dans un canal partiel (I ou Q), dans le cas de la modulation QPSK, et la séquence de données est constante dans l'autre partie de canal.

**20.** Procédé conforme à l'une ou à plusieurs des revendications 15 à 18, dans lequel la séquence est transmise dans les deux canaux paratiels (I et Q), dans le cas de la modulation QPSK, mais avec un signe différent (0 ou 1).

**21.** Procédé conforme à l'une ou à plusieurs des revendications 15 à 20, dans lequel la modulation du signal de synchronisation s'effectue au niveau le plus bas, c'est-à-dire à la base du procédé QPSK, dans le cas d'un procédé QAM ou d'un procédé QAM multirésolution.

**22.** Procédé conforme à l'une ou à plusieurs des revendications 15 à 21, dans lequel un nombre réduit d'ondes porteuses permettant l'identification de l'émetteur peuvent être transmises dans la partie nulle (1) à une puissance globalement si faible que la détection de la partie nulle dans le récepteur n'est pas considérablement détériorée.

**23.** Procédé conforme à l'une ou à plusieurs des revendications 15 à 22, dans lequel la durée du symbole de synchronisation peut être légèrement différente de la durée des symboles OFDM afin de sélectionner de façon optimale les rapports entre la durée de la trame, le nombre de symboles utiles par trame et la séquence de balayage, la partie nulle étant quelque peu réduite ou allongée dans ce symbole de synchronisation.

**24.** Procédé conforme à l'une ou à plusieurs des revendications 15 à 23, dans lequel la partie signal de l'information utile est convertie (41) dans le récepteur en plage de fréquences, puis multipliée conjuguée complexe (42) avec la séquence théorique enregistrée, le résultat est ensuite reconverti (43) en plage temporelle et la réponse impulsionnelle du canal obtenue est utilisée pour permettre une définition plus précise (32, 30) de la plage de temporisation des symboles.

**25.** Procédé conforme à la revendication 24, dans lequel une corrélation (45) est effectuée avec le signal converti en plage de fréquences et avec la séquence théorique enregistrée et le résultat obtenu représente une information sur l'écart de fréquence du signal converti dans un récepteur en une autre position de fréquence, par exemple, la bande de base, puis ce résultat est utilisé pour régler l'oscillateur du convertisseur de fréquences (AFC).

**26.** Procédé conforme à la revendication 24 ou 25, dans lequel le signal transformé en plage de fréquences est divisé en sections en fonction de l'aménagement des séquences transmises et les résultats partiels de chaque section sont convertis au format de la séquence de base et leur moyenne est calculée, puis une corrélation est effectuée avec la séquence théorique, enregistrée, de la forme de base de la séquence, dans lequel le résultat présente une information sur l'écart de fréquence du signal converti dans le récepteur et est utilisé pour régler l'oscillateur du convertisseur de fréquences (AFC) dans le récepteur.

**27.** Procédé conforme à l'une ou à plusieurs des revendications 24 à 26, dans lequel les valeurs de phase du symbole de synchronisation, calculées pour chaque onde porteuse, sont utilisées lors d'une modulation/démodulation différentielle (44) comme valeurs de référence pour les informations utiles (ultérieures) modulées des ondes porteuses ou les écarts des positions de phase théoriques du symbole de synchronisation définis sont utilisés lors d'une modulation/démodulation cohérente pour rectifier la position de phase des informations utiles, calculée ultérieurement.

**28.** Procédé conforme à l'une ou à plusieurs des revendications 24 à 27, dans lequel les valeurs de référence ou de correction des ondes porteuses non contenues dans le symbole de synchronisation sont obtenues par interpolation des valeurs de référence ou de correction des ondes porteuses voisines.

**29.** Procédé conforme à la revendication 14, dans lequel la séquence de bits est contenue dans une information de bit définie en séquence de temporisation et modulée vers une onde porteuse placée de manière centrale et l'intervalle de bits de la séquence de bits correspond aux intervalles de temporisation utilisés lors du balayage ou du surbalayage des symboles OFDM ou à un grand nombre de ces intervalles de temporisation.

**30.** Procédé conforme à la revendication 29, dans lequel une séquence représente environ un quart de la longueur du symbole OFDM.

**31.** Procédé conforme à la revendication 29 ou 30, dans lequel la séquence est transmise deux fois et possède de préférence une longueur de 512-1.

**32.** Procédé conforme à l'une ou à plusieurs des revendications 29 à 31, dans lequel l'intervalle de bits de la séquence correspond à n fois la valeur des intervalles de temporisation utilisés lors du surbalayage des symboles OFDM ou dans lequel les valeurs de la séquence sont transmises chacune n fois successivement pour une séquence de balayage définie.

**33.** Procédé conforme à l'une ou à plusieurs des revendications 29 à 32, dans lequel la partie signal du symbole de synchronisation est corrélée (31) dans le récepteur avec une séquence théorique enregistrée et le résultat représente une information sur l'écart de fréquence du signal converti dans un récepteur en une autre position de fréquence, par exemple la bande de base, puis est utilisé pour régler l'oscillateur du convertisseur de fréquences du récepteur (AFC), dans lequel seule chaque valeur n du balayage effectué dans une séquence inchangée est utilisée lors de la réception ou n corrélations sont effectuées avec des séquences déplacées de un à n intervalles d'analyse, où seule la valeur n obtenue est utilisée dans ces séquences, et seul le résultat présentant la valeur maximale continue à être utilisé.

**34.** Procédé conforme à la revendication 33, dans lequel sont effectuées les corrélations avec les séquences déplacées de un à n intervalles d'analyse où seule la valeur n obtenue est utilisée dans ces séquences, puis la moyenne des résultats des corrélations n est calculée (32).

**35.** Dispositif de décodage d'un signal numérique transmis en trames tout en utilisant un grand nombre d'ondes porteuses modulées et possédant un symbole de synchronisation diffusé sur la largeur de bande, dans lequel la puissance du signal dans une partie nulle (1) de la durée du symbole de synchronisation est nulle ou pratiquement nulle, et composé des éléments suivants :

- dispositifs de démodulation (13, TO) permettant de démoduler le signal reçu (RF) ;
- détecteurs ultérieurs de la partie de signal nul (15) permettant de détecter la partie nulle (1) ;
- décodeurs OFDM (OFDM) pour le signal démodulé reçu,
  **caractérisé par :**
- des dispositifs numériques d'analyse de la synchronisation (16) pour le signal démodulé reçu, qui sont commandés par un signal de sortie des détecteurs de la partie de signal nul (15) et commandant les décodeurs OFDM (OFDM), dans lequel la partie signal de l'information utile est convertie dans un circuit FFT (41) des dispositifs d'analyse de la synchronisation, en plage de fréquences, puis multipliée conjuguée complexe lors d'une autre étape (42) avec une séquence théorique enregistrée, ensuite reconvertie lors d'une étape $FFT^{-1}$ (43) en plage temporelle et la réponse impulsionnelle du canal obtenue est utilisée pour permettre une définition plus précise (32, 30) de la plage de temporisation des symboles.

**Fig.1**

**Fig.2**

**Fig.3**

Fig.4

**Fig.5**

EP 0 717 894 B1

Fig.6

**Fig.7**

**Fig.8**

| v | 0 | 1 | 2 | 3 | 4 | 5 | 6 | 7 | 8 | 9 | 10 | 11 | 12 | 13 | 14 | 15 |
|---|---|---|---|---|---|---|---|---|---|---|----|----|----|----|----|----|
| $Rc_v$ | 0 | -1 | 1 | 1 | -1 | 1 | 0 | 1 | 0 | -1 | -1 | 1 | 1 | 1 | 0 | 1 |
| $Ic_v$ | 1 | 0 | 0 | 0 | 0 | 0 | -1 | 0 | -1 | 0 | 0 | 0 | 0 | 0 | 1 | 0 |

**Fig.10**

**Fig.9**